# EUROPEAN PATENT APPLICATION

(11) **EP 2 146 290 A1**
(43) Date of publication of application: **20.01.2010**
(21) Application number: 08165819.7
(22) Date of filing: 25.01.2002
(51) Int. Cl.: G06F 17/30

(54) **Apparatus method and system for registration of a publisher prefix for document object identifiers**

(30) Priority: 08.02.2001 US 267875 P; 09.02.2001 US 267899 P; 09.10.2001 US 328270 P; 09.10.2001 US 328274 P; 09.10.2001 US 328275 P; 10.07.2001 US 303768 P; 14.02.2001 US 268766 P; 16.03.2001 US 276459 P; 21.02.2001 US 270473 P; 25.01.2001 US 264333 P; 29.03.2001 US 279792 P
(62) Divisional of application: 02713463.4
(71) Applicant: Content Directions, Inc., Brooklyn NY 11215 (US)
(72) Inventor: Sidman, David, Brooklyn, New York 11215 (US)
(74) Representative: Fennell, Gareth Charles

(57) **Abstract**

An apparatus, method and system to register and provide a persistent identifier of information that may be located in multiple locations, formats, and accessible in variable fashions based on the context of use. The present disclosure further provides the ability to automatically make information available and associated with its identifier. The disclosure also details the ability to create identifiers from content authoring tools within and for documents and/or other information. The invention teaches how to associate a single identifier while making information available, and accessible under varying conditions, from varying locations, in varying formats, based on various contexts of access. The present disclosure further teaches an enhanced digital object identifier, an enhanced Handle system, and enhanced directory registry that facilitate the access, association, and instantiation of information over a communications network.

## Description

### RELATED APPLICATIONS

The instant application hereby claims priority to the following US provisional patent applications: (1) serial number 60/264,333 for "Reference Linking with DOIs" filed on January 25, 2001 (attorney docket number 4188-4001); (2) serial number 60/268,766 for "Apparatus, Method, and System for Multiple Resolution Affecting Information Access" filed on February 14, 2001 (attorney docket number 4188-4002); (3) serial number 60/276,459 for "Apparatus, Method, and System for Registration Effecting Information Access" filed on March 16, 2001 (attorney docket number 4188-4003); (4) serial number 60/279,792 for "Apparatus, Method and System For Directory Quality Assurance" filed on March 29, 2001 (attorney docket number 4188-4004); (5) serial number 60/303,768 for "Apparatus, Method, and System for Accessing Digital Rights Management Information" filed on July 10, 200I (attorney docket number 4188-4005); (6) serial number 60/328,275 for "Apparatus, Method and System For Accessing Digital Rights Management Information" filed on October 9, 2001 (attorney docket number 4188-4005US1); (7) serial number 60/267,875 for "Apparatus, Method, and System for Accessing Information" filed on February 8, 2001 (attorney docket number 4188-4006); (8) serial number 60/267,899 for "Provisional filing for Apparatus, Method, and System for Accessing Information" filed on February 9, 2001 (attorney docket number 4188-4007); (9) serial number 60/270,473 for "Business Value and Implementation Considerations For The DOI" filed on February 21, 2001 (attorney docket number 4188-4008); (10) serial number 60/328,274 for "Apparatus, Method And System For Effecting Information Access In A Peer Environment" filed on October 9, 2001 (attorney docket number 4188-4010); (11) serial number 60/328,270 for "Apparatus, Method and System For Tracking Information Access" filed on October 9, 2001 (attorney docket number 4188-4011); each of these applications being herein incorporated by reference.

The instant application, also, hereby incorporates by reference the following Patent Cooperation Treaty applications: (12) for an "Apparatus, Method and System For Multiple Resolution Affecting Information Access" (attorney docket number 4188-4002PC), which was filed on January 25, 2002 in the name of David Sidman; (13) for an "Apparatus, Method and System For Directory Quality Assurance" (attorney docket number 4188-4004PC), which was filed on January 25, 2002 in the name of David Sidman; (14) Apparatus, Method and System For Accessing Digital Rights Management Information" (attorney docket number 4188-4005PC1), which was filed on January 25, 2002 in the name of David Sidman; (15) for an "Apparatus, Method and System For Effecting Information Access in a Peer Environment," (attorney docket number 4188-4010PC), which was filed on January 25, 2002 in the name of David Sidman; and (16) for an "Apparatus, Method and System For Tracking Information Access," (attorney docket number 4188-4011PC), which was filed on January 25, 2002 in the name of David Sidman.

### FIELD

The present invention relates generally to an apparatus, method and system to access information across a communications network. More particularly, the disclosed invention relates to an apparatus, method and system to register persistent identifiers for information access in various contexts of use on a communications network.

### BACKGROUND

### INTERNET

As Internet usage increases, the amount of information available on the Internet also increases. The information that exists on the Internet is of many different types, including documents in many formats such as: computer software, databases, discussion lists, electronic journals, library catalogues, online information services, mailing lists, news groups, streaming media, and the like. Fortunately, much of the information on the Internet can be accessed through the World-Wide Web using a web browser to interact with the network in a user-friendly way.

### NETWORKS

Networks are commonly thought to consist of the interconnection and interoperation of clients, servers, and intermediary nodes in a graph topology. It should be noted that the term "server" as used herein refers generally to a computer, other device, software, or combination thereof that processes and responds to the requests of remote users across a communications network. Servers serve their information to requesting "clients." A computer, other device, software, or combination thereof that facilitates, processes information and requests, and/or furthers the passage of information from a source user to a destination user is commonly referred to as a "node." Networks are generally thought to facilitate the transfer of information from source points to destinations.

### TRANSMISSION CONTROL PROTOCOL-INTERNET PROTOCOL (TCP/IP)

The proliferation and expansion of computer systems, databases, and networks of computers has been facilitated by an interconnection of such systems and networks in an extraterritorial communications network commonly referred to as the Internet. The Internet has developed and largely employs the Transmission Control Protocol-Internet Protocol (TCP/IP). TCP/IP was developed by a Department of Defense (DoD) research project to interconnect networks made by various and varying network vendors as a foundation for a network of networks, i.e., the Internet. The development of TCP/IP was in part driven by a requirement by the DoD to have a network that will continue to operate even if damaged during battle, thus allowing for information to be routed around damaged portions of the communications network to destination addresses. Of course, if the source or destination address location itself is rendered inoperable, such delivery will not be possible.

The Internet is a packet-switched network and thus, information on the Internet is broken up into pieces, called packets, and transmitted in packet form. The packets contain IP addressing information called headers, which are used by routers to facilitate the delivery of the packets from a source to a destination across intermediary nodes on the Internet. Upon arrival at the destination, the packets are reassembled to form the original message, and any missing packets are requested again.

The IP component of the protocol is responsible for routing packets of information based on a four byte addressing mechanism; the address is written as four numbers separated by dots, each number ranging from 0 to 255, e.g., "123.255.0.123". IP addresses are assigned by Internet authorities and registration agencies, and are unique.

The TCP portion of the protocol is used for verifying that packets of information are correctly received by the destination computer from the source, and if not, to retransmit corrupt packets. Other transmission control protocols are also commonly used that do not guarantee delivery, such as User Datagram Protocol (UDP).

### WORLD WIDE WEB

The proliferation and expansion of the Internet, and particularly the World Wide Web (the web), have resulted in a vast and diverse collection of information. Various user interfaces that facilitate the interaction of users with information technology systems (i.e., people using computers) are currently in use. An information navigation interface called WorldWideWeb.app (the web) was developed in late 1990. Subsequently, information navigation interfaces such as web browsers have become widely available on almost every computer operating system platform.

Generally, the web is the manifestation and result of a synergetic interoperation between user interfaces (e.g., web browsers), servers, distributed information, protocols, and specifications. Web browsers were designed to facilitate navigation and access to information, while information servers were designed to facilitate provision of information. Typically, web browsers and information servers are disposed in communication with one another through a communications network. Information Servers function to serve information to users that typically access the information by way of web browsers. As such, information servers typically provide information to users employing web browsers for navigating and accessing information on the web. Microsoft's Internet Explorer and Netscape Navigator are examples of web browsers. In addition, navigation user interface devices such as WebTV have also been implemented to facilitate web navigation. Microsoft's Information Server and Apache are examples of information servers.

### UNIVERSAL RESOURCE LOCATOR (URL)

The expansion of the web has resulted in an enormous quantity of information, which is accessible through the use of Universal Resource Locators (URLs). An URL is an address that is typically embodied as a hyperlink in a web page or is typed into a web browser. URLs for a given resource (most commonly a file located on a remote computer) refer only to a location for that resource. Typically, the reference to the location is achieved through the use of an unresolved IP address in conjunction with a directory path and file name; e.g., "http://www.aWebSite.com/aFolder/aFile.html". In this example, the URL directs the browser to connect to the computer named "www" in the domain "aWebSite.com," and to request the file named "aFile.html" stored in directory "aFolder" at that computer.

### UNIVERSAL NAME IDENTIFIER (UNI)

The Corporation for National Research Initiatives has created and implemented a new means of naming and locating information, called the Handle System. The Handle System is designed to improve upon the current use of URLs.

The Handle System introduces a level of indirection to locating and distributing information over the Internet. The Handle System is a general-purpose system for naming resources. Instead of being assigned a URL based on a particular resource's current network location, a resource may be assigned a Universal Name Identifier. A UNI is a form of Universal Resource Identifier (URI). URIs include both UNIs and URLs. A UNI, unlike a URL, serves and shall be regarded henceforth as a name for the resource that is persistent regardless of changes in the resource's location or other attributes. In turn, a Universal Resource Name (URN) is a type of UNI (i.e., a UNI subsumes the concept of a URN). Furthermore, a Handle is a type of URN. And a Digital Object Identifier (DOI) is a type of Handle. Thus, various forms of UNIs include Handles, URNs, DOIs, and/or the like. The various terms and/or forms of UNIs will be used interchangeably throughout this document, and may be assumed to be interchangeable unless stated otherwise. A Handle is a unique name, which is registered with the Handle System along with the current network location of the named resource. This location information commonly takes the form of a URL. One common type of Handle is known as a Digital Object Identifier (DOI). Handles may be then distributed to users in lieu of a URL, and superficially appear to function similarly to a hyperlink. When a user encounters a Handle, the user may select or enter the Handle much like a URL hyperlink, so long as the user's web browser is capable of making Handle requests. Such an encounter triggers an automated process to look up a resource's current location. The current location of the resource is associated with the resource's Handle in a directory made available by the Handle System, which in turn directs the user to the resource's current location. Unlike with a URL, if the resource moves, the Handle System directory entry can be updated, thereby assuring a persistent association between a Handle and the resource it identifies. An analogy can be made to the physical world: knowing only a URL for a given resource is akin to knowing only a person's street address, and not her name. If she were to move across town, it would be very difficult to locate her without knowing her name. The Handle System allows resources to be permanently named by way of a Handle, and it allows the current network location of resources to be looked up based on that name in a Handle System directory.

### SUMMARY

Digital Object Identifiers overcome many of the shortcomings of IP- and other location-based addressing schemes. DOIs enable access to information over a communications network by providing a persistent identifier for information that may be regularly relocated. DOIs overcome the limitations of network addressing schemes limited to addressing locations by providing a mechanism to associate identifiers with information through an added level of indirection instead of associating identifiers with locations

Although DOIs provide a mechanism that allows for the association of an identifier with information instead of a location, DOIs in and of themselves do not provide for the access of multiple and/or varying instances of a piece of information in various locations, formats, or the access of various services associated with a given piece of information, based on various contexts of use.

One embodiment of the disclosed invention teaches how to access information across a communications network from multiple locations, in multiple formats, and accessible in variable fashions based on varying contexts of use. The present invention also overcomes the limitations of prior addressing schemes with the novel ability to associate a single identifier with information available, and accessible under varying conditions, from varying locations, in varying formats, based on various contexts of access.

Generally, according to one aspect of the present invention, publishers of content, hereinafter referred to as publishers, assign Digital Object Identifiers to information by registering them with a DOI registration agency.

According to another aspect of the invention, at the time of registration, registrants or the registration agency may further register a number of type-value pairs to be associated with the DOI they are registering. According to yet a further aspect of the invention, the registered types and their associated values are used to provide multiple resolutions for registered DOIs. A "resolution" as defined by THE DOI HANDBOOK is a process for submitting a DOI identifier and receiving in response thereto one or more pieces of current information related to the submitted identifer. A simple resolution is one wherein the DOI resolves to a single piece of information, usually the URL for (i.e., the current network location of) a web page associated with the resource identified by the DOI. By contrast, a multiple resolution in accordance with the present invention is one that has more than one possible resolution available under varying contexts.

The above advantages and features are of representative embodiments only, and are not exhaustive and/or exclusive. They are presented only to assist in understanding the invention. It should be understood that they are not representative of all the inventions defined by the claims, to be considered limitations on the invention as defined by the claims, or limitations on equivalents to the claims. For instance, some of these advantages may be mutually contradictory, in that they cannot be simultaneously present in a single embodiment. Similarly, some advantages are applicable to one aspect of the invention, and inapplicable to others. Furthermore, certain aspects of the claimed invention have not been discussed herein. However, no inference should be drawn regarding those discussed herein relative to those not discussed herein other than for purposes of space and reducing repetition. Thus, this summary of features and advantages should not be considered dispositive in determining equivalence. Additional features and advantages of the invention will become apparent in the following description, from the drawings, and from the claims.

### BRIEF DESCRIPTION OF THE DRAWINGS

The accompanying drawings illustrate certain embodiments of the disclosure.
Figure 1 illustrates one example embodiment incorporated into an IARS controller;
Figures 2 and 3 illustrate URL addressing across a communications network with moving information;
Figure 4 illustrates accessing of information through DOIs;
Figures 5 and 6 provide an overview of a Handle;
Figures 7 and 8 provide an overview of the resolution mechanism for allowing users to access desired information;
Figure 9 provides an overview of an exemplary sequence of actions that a user performs to access information using DOIs;
Figure 10 provides a more complete overview of an exemplary sequence of actions that users perform to access content information;
Figure 11 illustrates an exemplary mechanism for accessing information over a communications network;
Figure 12 provides an overview of another embodiment of exemplary mechanisms for retrieving information over a communications network;
Figure 13 provides an overview of an exemplary DOI system;
Figure 14 illustrates one non-limiting example of the Information Access Registration Server (IARS) interacting with various entities;
Figures 15 and 16 illustrate non-limiting examples of the IARS interacting with various entities;
Figure 17 illustrates a non-limiting example of the IARS interacting with various entities in the registration of a Handle;
Figure 18 illustrates a non-limiting example of registration tool options;
Figure 19 illustrates a non-limiting example of a registration tool;
Figure 20 illustrates an alternative embodiment of a registration tool;
Figure 21 illustrates one non-limiting example flow diagram of an IARS registration facility;
Figure 22 illustrates a non-limiting example of a publisher prefix registration tool;
Figure 23 illustrates one non-limiting example flow diagram of an IARS prefix registration facility;
Figure 24 illustrates one non-limiting example of IARS options;
Figure 25 illustrates one non-limiting example of IARS batch DOI registration tool;
Figure 26 illustrates one non-limiting example of an IARS batch registration facility;
Figure 27 illustrates one non-limiting example of an IARS batch file;
Figure 28 illustrates one non-limiting example of IARS error reporting options;
Figure 29 illustrates one non-limiting example of IARS batch status reporting options;
Figure 30 illustrates one non-limiting example of IARS batch status report;
Figure 31 illustrates one non-limiting example of IARS DOI lookup tool;
Figure 32 illustrates one non-limiting example of IARS DOI lookup search results.

### DETAILED DESCRIPTION

### INFORMATION ACCESS REGISTRATION SERVER CONTROLLER

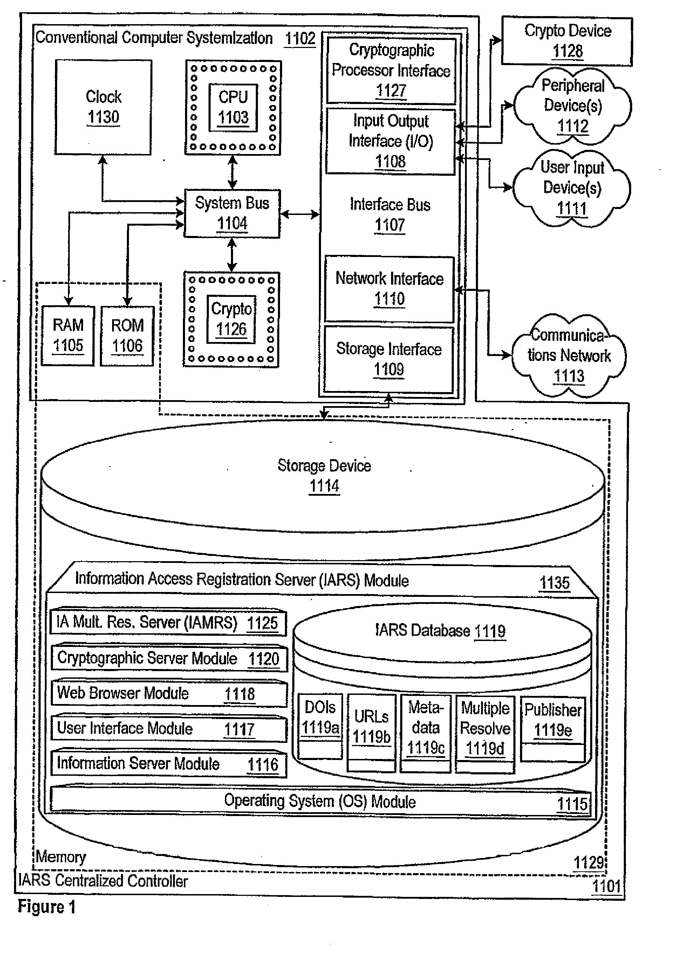

Figure 1 illustrates one example embodiment incorporated into an Information Access Registration Server (IARS) controller 1101. In this embodiment, the IARS controller 1101 may serve to register, resolve, process, store, and update Handles and any associated information, and/or the like.

In one embodiment, the IARS controller 1101 may be connected to and/or communicate with entities such as, but not limited to: one or more users from user input devices 1111; peripheral devices 1112; and/or a communications network 1113. The IARS controller may even be connected to and/or communicate with a cryptographic processor device 1128.

A typical IARS controller 1101 may be based on common computer systems that may comprise, but are not limited to, components such as: a computer systemization 1102 connected to memory 1129.

### Computer Systemization

A computer systemization 1102 may comprise a clock 1130, central processing unit (CPU) 1103, a read only memory (ROM), a random access memory (RAM), and/or an interface bus 1107, and conventionally, although not necessarily, are all interconnected and/or communicating through a system bus 1104. The system clock typically has a crystal oscillator and provides a base signal. The clock is typically coupled to the system bus and various means that will increase or decrease the base operating frequency for other components interconnected in the computer systemization. The clock and various components in a computer systemization drive signals embodying information throughout the system. Such transmission and reception of signals embodying information throughout a computer systemization may be commonly referred to as communications. These communicative signals may further be transmitted, received, and the cause of return and/or reply signal communications beyond the instant computer systemization to: communications networks, input devices, other computer systemizations, peripheral devices, and/or the like. Optionally, a cryptographic processor 1126 may similarly be connected to the system bus. Of course, any of the above components may be connected directly to one another, connected to the CPU, and/or organized in numerous variations employed as exemplified by various computer systems.

The CPU comprises at least one high-speed data processor adequate to execute program modules for executing user and/or system-generated requests. The CPU may be a microprocessor such as the Intel Pentium Processor and/or the like. The CPU interacts with memory through signal passing through conductive conduits to execute stored program code according to conventional data processing techniques. Such signal passing facilitates communication within the IARS controller and beyond through various interfaces.

### Interface Adapters

Interface bus(ses) 1107 may accept, connect, and/or communicate to a number of interface adapters, conventionally although not necessarily in the form of adapter cards, such as but not limited to: input output interfaces (I/O) 1108, storage interfaces 1109, network interfaces 1110, and/or the like. Optionally, cryptographic processor interfaces 1127 similarly may be connected to the interface bus. The interface bus provides for the communications of interface adapters with one another as well as with other components of the computer systemization. Interface adapters are adapted for a compatible interface bus. Interface adapters conventionally connect to the interface bus via a slot architecture. Conventional slot architectures may be employed, such as, but not limited to: Accelerated Graphics Port (AGP), Card Bus, (Extended) Industry Standard Architecture ((E)ISA), Micro Channel Architecture (MCA), NuBus, Peripheral Component Interconnect (PCI), Personal Computer Memory Card International Association (PCMCIA), and/or the like.

Storage interfaces 1109 may accept, communicate, and/or connect to a number of storage devices such as, but not limited to: storage devices 1114, removable disc devices, and/or the like. Storage interfaces may employ connection protocols such as, but not limited to: (Ultra) Advanced Technology Attachment (Packet Interface) ((Ultra) ATA(PI)), (Enhanced) Integrated Drive Electronics ((E)IDE), Institute of Electrical and Electronics Engineers (IEEE) 1394, fiber channel, Small Computer Systems Interface (SCSI), Universal Serial Bus (USB), and/or the like.

Network interfaces 1110 may accept, communicate, and/or connect to a communications network 1113. Network interfaces may employ connection protocols such as, but not limited to: direct connect, Ethernet (thick, thin, twisted pair 10/ 100/1000 Base T, and/or the like), Token Ring, wireless connection such as IEEE 802.11b, and/or the like. A communications network may be any one and/or the combination of the following: a direct interconnection; the Internet; a Local Area Network (LAN); Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. A network interface may be regarded as a specialized form of an input output interface.

Input Output interfaces (I/O) 1108 may accept, communicate, and/or connect to user input devices 1111, peripheral devices 1112, cryptographic processor devices 1128, and/or the like. I/O may employ connection protocols such as, but not limited to: Apple Desktop Bus (ADB); Apple Desktop Connector (ADC); audio: analog, digital, monaural, RCA, stereo, and/or the like; IEEE 1394; infrared; joystick; keyboard; midi; optical; PC AT; PS/2; parallel; radio; serial; USB; video interface: BNC, composite, digital, RCA, S-Video, VGA, and/or the like; wireless; and/or the like. A common output device is a video display, which typically comprises a CRT or LCD based monitor with an interface (e.g., VGA circuitry and cable) that accepts signals from a video interface. The video interface composites information generated by a computer systemization and generates video signals based on the composited information. Typically, the video interface provides the composited video information through a video connection interface that accepts a video display interface (e.g., a VGA connector accepting a VGA display cable).

User input devices 1111 may be card readers, dongles, finger print readers, gloves, graphics pads, joysticks, keyboards, mouse (mice), trackballs, trackpads, retina readers, and/or the like.

Peripheral devices 1112 may be connected and/or communicate with or to I/O and/or with or to other facilities of the like such as network interfaces, storage interfaces, and/or the like). Peripheral devices may be cameras, dongles (for copy protection, ensuring secure transactions as a digital signature, and/or the like), external processors (for added functionality), goggles, microphones, monitors, network interfaces, printers, scanners, storage devices, visors, and/or the like.

Cryptographic units such as, but not limited to, microcontrollers, processors 1126, interfaces 1127, and/or devices 1128 may be attached, and/or communicate with the IARS controller. A MC68HC16 microcontroller, commonly manufactured by Motorola Inc., may be used for and/or within cryptographic units. Equivalent microcontrollers and/or processors may also be used. The MC68HC16 microcontroller utilizes a 16-bit multiply-and-accumulate instruction in the 16 MHz configuration and requires less than one second to perform a 512-bit RSA private key operation. Cryptographic units support the authentication of communications from interacting agents, as well as allowing for anonymous transactions. Cryptographic units may also be configured as part of CPU. Other commercially available specialized cryptographic processors include VLSI Technology's 33 MHz 6868 or Semaphore Communications' 40 MHz Roadrunner284.

### Memory

A storage device 1114 may be any conventional computer system storage. Storage devices may be a fixed hard disk drive, and/or other devices of the like. However, it is to be understood that an IARS controller and/or a computer systemization may employ various forms of memory 1129. For example, a computer systemization may be configured wherein the functionality of on-chip CPU memory (e.g., registers), RAM, ROM, and any other storage devices are provided by a paper punch tape or paper punch card mechanism; of course such an embodiment is not preferred and would result in an extremely slow rate of operation. In a typical configuration, memory 1129 will include ROM, RAM, and a storage device 1114. Generally, any mechanization and/or embodiment allowing a processor to affect the storage and/or retrieval of information is regarded as memory 1129. Thus, a computer systemization generally requires and makes use of memory. However, memory is a fungible technology and resource, thus, any number of memory embodiments may be employed in lieu of or in concert with one another.

### Module Collection

The storage devices 1114 may contain a collection of program and/or database modules and/or data such as, but not limited to: an operating system module 1115 (operating system); an information server module 1116 (information server); a user interface module 1117 (user interface); a web browser module 1118 (web browser); databases 1119; a cryptographic server module 1120 (cryptographic server); Information Access Registration Server (IARS) module 1125; and/or the like (i.e., collectively a module collection). These modules may be stored and accessed from the storage devices and/or from storage devices accessible through an interface bus. Although non-conventional software modules such as those in the module collection, typically and preferably, are stored in a local storage device 1114, they may also be loaded and/or stored in memory such as: peripheral devices, RAM, remote storage facilities through a communications network, ROM, various forms of memory, and/or the like.

### Operating System

The operating system module 1115 is executable program code facilitating the operation of an IARS controller. Typically, the operating system facilitates access of I/O, network interfaces, peripheral devices, storage devices, and/or the like. The operating system preferably is a conventional product such as Apple Macintosh OS X Server, AT&T Plan 9, Microsoft Windows NT Server, Unix, and/or the like operating systems. Preferably, the operating system is highly fault tolerant, scalable, and secure. An operating system may communicate to and/or with other modules in a module collection, including itself, and/or facilities of the like. Conventionally, the operating system communicates with other program modules, user interfaces, and/or the like. For example, the operating system may contain, communicate, generate, obtain, and/or provide program module, system, user, and/or data communications, requests, and/or responses. The operating system, once executed by the CPU, may enable the interaction with communications Networks, data, I/O, peripheral devices, program modules, memory, user input devices, and/or the like. Preferably, the operating system provides communications protocols that allow the IARS controller to communicate with other entities through a communications network 1113. Various communication protocols may be used by the IARS controller as a subcarrier transport mechanism for interacting with the Handle System, such as, but not limited to: multicast, TCP/IP, UDP, unicast, and/or the like.

### Information Server

An information server module 1116 is stored program code that is executed by the CPU. The information server may be a conventional Internet information server such as, but not limited to, Microsoft's Internet Information Server and/or the Apache Software Foundation's Apache. Preferably, the information server allows for the execution of program modules through facilities such as C++, Java, JavaScript, ActiveX, Common Gateway Interface (CGI) scripts, Active Server Page (ASP), and/or the like. Preferably the information server supports secure communications protocols such as, but not limited to, File Transfer Protocol (FTP); HyperText Transfer Protocol (HTTP); Secure Hypertext Transfer Protocol (HTTPS), Secure Socket Layer (SSL), and/or the like. Conventionally, an information server provides results in the form of web pages to web browsers, and allows for the manipulated generation of the web pages through interaction with other program modules. After a DNS resolution portion of an HTTP request is resolved to a particular information server, the information server resolves requests for information at specified locations on an IARS controller based on the remainder of the HTTP request. For example, a request such as http://123.124.125.126/myInformation.html might have the IP portion of the request "123.124.125.126" resolved by a DNS server to an information server at that IP address; that information server might in turn further parse the http request for "/myInformation.html" portion of the request and resolve it to a location in memory containing the information "myInformation.html." An information server may communicate to and/or with other modules in a module collection, including itself, and/or facilities of the like. Most frequently, the information server communicates with operating systems, other program modules, user interfaces, web browsers, and/or the like. An information server may contain, communicate, generate, obtain, and/or provide program module, system, user, and/or data communications, requests, and/or responses.

### User Interface

A user interface module 1117 is stored program code that is executed by the CPU. Preferably, the user interface is a conventional graphic user interface as provided by, with, and/or atop operating systems and/or operating environments such as Apple Macintosh OS, e.g., Aqua, Microsoft Windows (NT), Unix X Windows (KDE, Gnome, and/or the like), and/or the like. The user interface may allow for the display, execution, interaction, manipulation, and/or operation of program modules and/or system facilities through textual and/or graphical facilities. The user interface provides a facility through which users may affect, interact, and/or operate a computer system. A user interface may communicate to and/or with other modules in a module collection, including itself, and/or facilities of the like. Most frequently, the user interface communicates with operating systems, other program modules, and/or the like. The user interface may contain, communicate, generate, obtain, and/or provide program module, system, user, and/or data communications, requests, and/or responses.

### Web Browser

A web browser module 1118 is stored program code that is executed by the CPU. Preferably, the web browser is a conventional hypertext viewing application such as Microsoft Internet Explorer or Netscape Navigator (preferably with 128bit encryption by way of HTTPS, SSL, and/or the like). Some web browsers allow for the execution of program modules through facilities such as Java, JavaScript, ActiveX, and/or the like. Web browsers and like information access tools may be integrated into PDAs, cellular telephones, and/or other mobile devices. A web browser may communicate to and/or with other modules in a module collection, including itself, and/or facilities of the like. Most frequently, the web browser communicates with information servers, operating systems, integrated program modules (e.g., plug-ins), and/or the like; e.g., it may contain, communicate, generate, obtain, and/or provide program module, system, user, and/or data communications, requests, and/or responses. Of course, in place of a web browser and information server, a combined application may be developed to perform similar functions of both. The combined application would similarly affect the obtaining and the provision of information to users, user agents, and/or the like from IARS enabled nodes. The combined application may be nugatory on systems employing standard web browsers. Such a combined module could be configured to communicate directly with the IARS without an intermediary information server to further enhance security.

### IARS Database

A IARS database module 1119 may be embodied in a database that is stored program code that is executed by the CPU and its stored data; the stored program code portion configuring the CPU to process the stored data. Alternatively, the IARS database may be implemented using various standard data structures, such as an array, hash, (linked) list, struct, and/or the like. If the IARS database is implemented as a data structure, the use of the IARS database may be integrated into another module such as the IARS module. In one non-limiting example embodiment, the database module 1119 includes tables such as but not limited to a DOI (i.e., Handle or other resource name) table 1119a, URL table 1119b, metadata table 1119c, multiple resolution table 1119d, a publisher table 1119e, and/or the like. All the tables may be related by (enhanced) DOI key field entries as they are unique. An IARS database may communicate to and/or with other modules in a module collection, including itself, and/or facilities of the like. Most frequently, the IARS database communicates with an IARS module, other program modules, and/or the like. The database may contain, retain, and provide information regarding other nodes and data.

### Cryptographic Server

A cryptographic server module 1120 is stored program code that is executed by the CPU 1103, cryptographic processor 1126, cryptographic processor interface 1127, cryptographic processor device 1128, and/or the like. Preferably, cryptographic processor interfaces will allow for expedition of encryption and/or decryption requests by the cryptographic module; however, the cryptographic module, alternatively, may run on a conventional CPU. Preferably, the cryptographic module allows for the encryption and/or decryption of provided data. Preferably, the cryptographic module allows for both symmetric and asymmetric (e.g., Pretty Good Protection (PGP)) encryption and/or decryption. Preferably, the cryptographic module allows conventional cryptographic techniques such as, but not limited to: digital certificates (e.g., X.509 authentication framework), digital signatures, dual signatures, enveloping, password access protection, public key management, and/or the like. Preferably, the cryptographic module will facilitate numerous encryption and/or decryption protocols such as, but not limited to: Data Encryption Standard (DES), Elliptical Curve Encryption (ECC), International Data Encryption Algorithm (IDEA), Message Digest 5 (MD5, which is a one way hash function), RC5 (Rivest Cipher), Rijndael, RSA (which is an Internet encryption and authentication system that uses an algorithm developed in 1977 by Ron Rivest, Adi Shamir, and Leonard Adleman), Secure Hash Algorithm (SHA), Secure Socket Layer (SSL), Secure Hypertext Transfer Protocol (HTTPS), and/or the like. A cryptographic module may communicate to and/or with other modules in a module collection, including itself, and/or facilities of the like. Preferably, the cryptographic module supports encryption schemes allowing for the secure transmission of information across a communications network to enable an IARS module to engage in secure transactions if so desired by users. Most frequently, the cryptographic module communicates with information servers, operating systems, other program modules, and/or the like. The cryptographic module may contain, communicate, generate, obtain, and/or provide program module, system, user, and/or data communications, requests, and/or responses.

### Information Access Multiple Resolution Server (IAMRS)

An IAMRS module 1125 is stored program code that is executed by the CPU. Generally, the IARS affects accessing, obtaining and the provision of information, and/or the like between nodes on a communications network. The IAMRS has the ability to resolve UNIs to multiple instantiations. Generally, the IAMRS acts as a lookup facility to create, maintain, and update associations between a given piece of information, its DOI, and its current locations. The IAMRS coordinates with the IARS database to identify nodes that may be useful for improving data transfer for requested information, for resolving to various formats of the requesting information, providing an enhanced mechanism to create queries regarding the information, and/or the like. An IAMRS enabling access of information between nodes may be developed by employing standard development tools such as, but not limited to: C++, shell scripts, Java, Javascript, SQL commands, web application server extensions, Apache modules, Perl scripts, binary executables, and/or other mapping tools, and/or the like. In one non-limiting example embodiment, the IAMRS server employs a cryptographic server to encrypt and decrypt communications. The IAMRS may service requests, update association information for UNIs, and much more. An IARS module may communicate to and/or with other modules in a module collection, including itself, and/or facilities of the like. Most frequently, the IAMRS module communicates with an IARS database, operating systems, other program modules, and/or the like. The IARS may contain, communicate, generate, obtain, and/or provide program module, system, user, and/or data communications, requests, and/or responses.

### Information Access Registration Server (IARS)

An IARS module 1135 is stored program code that is executed by the CPU. Generally, the IARS affects accessing, obtaining and the provision of information, and/or the like between nodes on a communications network. The IARS has the ability to register resource names (e.g., Handles) thereby effecting an association between the resource name and a piece of information and/or the information's location. Registration of a resource name may be associated with multiple instantiations. Generally, the IARS acts as a facility to create, maintain, register, and update associations between a given piece of information, its DOI, and its current locations. The IARS coordinates with the IARS database to identify nodes that may be useful for improving data transfer for requested information, for resolving to various formats of the requesting information, providing an enhanced mechanism to create queries regarding the information, and/or the like. An IARS enabling access of information between nodes maybe be developed by employing standard development tools such as, but not limited to: C++, shell scripts, Java, Javascript, SQL commands, web application server extensions, Apache modules, Perl scripts, binary executables, and/or other mapping tools, and/or the like. In one non-limiting example embodiment, the IARS server employs a cryptographic server to encrypt and decrypt communications. The IARS may service requests, update association information for UNIs, register UNIs, and much more. An IARS module may communicate to and/or with other modules in a module collection, including itself, and/or facilities of the like. Most frequently, the IARS module communicates with an IARS database, an IAMRS module, operating systems, other program modules, and/or the like. The IARS may contain, communicate, generate, obtain, and/or provide program module, system, user, and/or data communications, requests, and/or responses.

### Distributed IARS

The functionality of any of the IARS node controller components may be combined, consolidated, and/or distributed in any number of ways to facilitate development and/or deployment. Similarly, the module collection may be combined in any number of ways to facilitate deployment and/or development. To accomplish this, one must simply integrate the components into a common code base or in a facility that can dynamically load the components on demand in an integrated fashion.

The module collection may be consolidated and/or distributed in countless variations through standard data processing and/or development techniques. Multiple instances of any one of the program modules in the program module collection may be instantiated on a single node, and/or across numerous nodes to improve performance through load balancing data processing techniques. Furthermore, single instances may also be distributed across multiple controllers and/or storage devices; e.g., databases.

All program module instances and controllers working in concert may do so through standard data processing communication techniques.

The preferred node controller configuration will depend on the context of system deployment. Factors such as, but not limited to, the capacity and/or location of the underlying hardware resources may affect deployment requirements and configuration. Regardless of if the configuration results in more consolidated and/or integrated program modules, results in a more distributed series of program modules, and/or results in some combination between a consolidated and/or distributed configuration, communication of data may be communicated, obtained, and/or provided. Instances of modules (from the module collection) consolidated into a common code base from the program module collection may communicate, obtain, and/or provide data. This may be accomplished through standard data processing techniques such as, but not limited to: data referencing (e.g., pointers), internal messaging, object instance variable communication, shared memory space, variable passing, and/or the like (intra-application communication).

If module collection components are discrete, separate, and/or external to one another, then communicating, obtaining, and/or providing data with and/or to other module components may be accomplished through standard data processing techniques such as, but not limited to: Application Program Interfaces (API) information passage; (distributed). Component Object Model ((D)COM), (Distributed) Object Linking And Embedding ((D)OLE), and/or the like), Common Object Request Broker Architecture (CORBA), process pipes, shared files, and/or the like (inter-application communication). Messages sent between discrete module components for inter-application communication or within memory spaces of a singular module for intra-application communication may be facilitated through the creation and parsing of a grammar. A grammar may be developed by using standard development tools such as lex, yacc, and/or the like, which allow for grammar generation and parsing functionality, which in turn may form the basis of communication messages within and between modules. Again, the preferable embodiment will depend upon the context of system deployment. Finally, it is to be understood that the logical or topological structure of any combination of the module collection are not limited to a fixed execution order and/or arrangement, but rather, any disclosed order is exemplary and all functional equivalents, regardless of order, are contemplated by the disclosure.

### IP ADDRESSING

Users access communications networks through addresses. Addresses represent locations. Users traverse locations in a communications network hoping to find information. A common communications addressing scheme employs the IP address. The IP address may be likened to the real world by analogy to a street address. The IP address itself is a sequence of numbers, e.g., 209.54.94.99, and commonly has an associated name, e.g., www.contentdirections.com. A distributed database registry maintains the associated pairs of names and IP addresses and serves to resolve associated names into corresponding IP addresses. This allows people to remember and use names, e.g., www.report.com, instead of being forced to memorize and use a series of numbers, e.g., 209.54.94.99. These distributed databases assisting in the name resolution of IP addresses are commonly referred to as Domain Name Servers (DNS).

It is common for IP addresses to be embodied as Universal Resource Locators (URLs) that append even more navigation information into an address. Users may employ software to access information stored at URLs through the use of HTTP. An example is when a user specifies "http://www.report.com /reports/1999/IncomeStatement.html" in a web browser. Typically this further navigation information, i.e., "/reports/1999/IncomeStatement.html," provides a specific storage location within a computer server. This further navigation location may be likened to a real world address more specific than a street address that includes information such as a company name, department, and room number. This further navigation location is typically not Handled or resolved by DNSs, but instead by an information server at the resolved IP address. For example, an information server at the resolved address of 123.123.123.123 for www.report.com would interpret and return information at a local location of "/reports/1999/IncomeStatement.html" within the server. An Information Server is a means for facilitating communications between a communication network and the computer server at a particular IP address. Commercial examples of an Information Server include Apache. An Information Server may be likened to a mail department for a business that further routes correspondence to appropriate locations within the business.

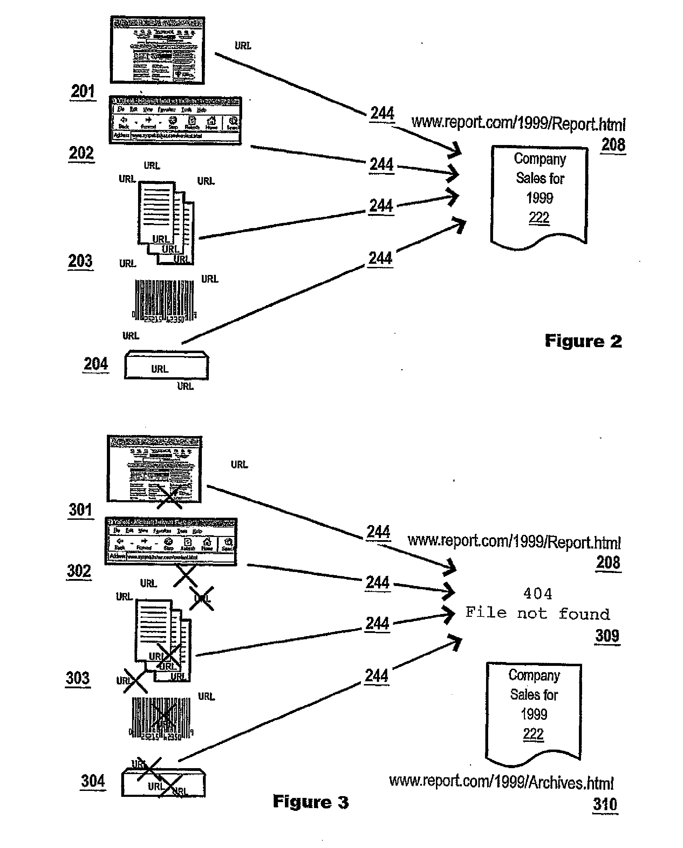

Figures 2 and 3 illustrate that IP addressing mechanisms do not maintain an association with information as it moves across a communications networks. Web page links generally employ HTTP, which in turn relies on IP addressing. Thus, URL links simply point to a location on a communication network and are not necessarily associated with any specific information. For example, a URL link referencing www.news.com will have different information associated between the URL and the information made available at the www.news.com location as information at the location is updated daily. In many instances, locations themselves may disappear as companies move information, move their operations, go out of business, etc.

For example, a report entitled "Company Sales for 1999" 222 existing at a location www.report.com/1999/Report.html 208 may be moved to www.report-archives.com/1999/Old-report.html 310, e.g., because the information was sold from one entity to another, archived, or for many other reasons. The report at www.report.com/1999/Report.html 208 may have had 5 million web pages and URL links referencing the location 244, and when users attempt to access the information they may well receive a "404 File not found" error 309 because that location no longer exists and/or no longer contains the desired information. The error results because the DNSs were designed to always resolve users' requests to a location and because DNSs are not designed to maintain an association between URLs and a specific instantiation of information.

Figure 2 depicts a web page 201, a user entered address 202, a document 203, and a memory device 204 all employing URLs and consequently IP addressing in an attempt to reference a piece of information (the report "Company Sales for 1999) 222. Then in Figure 2, the information 222 is moved from its original location 208 (for example at www.report.com/1999/Report.html) to a new location 310 of Figure 2 (for example www.report.com/1999/Archives.html). In Figure 3, this results in breaking 301-304 all the URLs 244 referencing the location and produces the dreaded "404 file not found" error 309 for all users and URLs making reference to the location (www.report.com/1999/Report.html) 208.

### HANDLE SYSTEM

Once a piece of information has been assigned a DOI and has been made available, the DOI system needs to be able to resolve what the user of the DOI wants to access. The technology that is used to manage the resolution of DOIs is better known as the "Handle System," and will be described in more detail below. THE DOI HANDBOOK provides a general overview of basic DOIs. In a nutshell, the Handle System includes an open set of protocols, a namespace, and an implementation of the protocols. The protocols enable a distributed computer system to store Handles (such as DOIs) of digital content and resolve those Handles into the information necessary to locate and access the content, to locate and access information related to the content, or to locate and access (i.e., provide an interface to) services associated with the content. This associated information can be changed as needed to reflect the current state of the identified content without changing the DOI, thus allowing the name of the item to persist over changes of location and other state information. Combined with a centrally administered DOI registration agency, the Handle System provides a general-purpose, distributed global naming service for the reliable management of information and services on networks over long periods of time. It is important to note that throughout the present disclosure that "source," "content" and/or "information" made accessible through the DOI system may comprise any identifiable content, source, information, services, transactions, and work of authorship, including articles, books, intangible objects, music albums, people, tangible physical objects, and/or the like further including selected discrete portions and/or combinations thereof. The accessible information may be a URL to an application that initiates a service, a transaction, provides a selection mechanism, and/or the like. In one non-limiting example, the DOI may even be associated with information identifying a human being such as a social security number, telephone number, and/or the like. In another non-limiting example, the DOI may be associated with software modules, programming "objects," or any other network-based resource. Furthermore, a DOI can be used to represent most anything including the online representation of physical products (e.g., items currently identified by UPC or bar codes). In such an example, DOIs could resolve to the manufacturer's catalog page describing or offering the product, or even, in a multiple-resolution scenario, offer all services related to the object such as where to go to get the item repaired; where to find replacement parts; what.the new or replacement product is; what kinds of pricing or leasing options are available, etc. Other example embodiments implementing DOIs include: representing different modules of software that may operate in distributed fashion across a communications network; telephone numbers for Voice-over-IP technology; gene sequences; medical records and/or other permanent records (DOIs will be especially useful with permanent records protected via encryption and/or other method that might invoke a certificate or decryption key); and/or the like. Another example embodiment for a DOI is to represent the permanent location of a temporary and/or dynamic value such as, but not limited to a current stock quote; current bid and offer prices (for stocks and/or any other kind of auction and/or exchange); a company's current annual report (versus different DOIs for different prior-year annual reports); and/or the like.

Users may access information through Digital Object Identifiers (DOIs). DOIs are associated with (i.e., are names for) information itself. DOIs are instances of "Handles" and operate within the framework of the "Handle system." A DOI allows for access to persistently associated information. The DOI is a string of characters followed by a separator further followed by a string of characters, e.g., 10,1065/abc123def. It should be noted and re-emphasized that although the present disclosure may make mention of specific sub-types of UNIs such as "URNs," "DOIs" and "Handles," the present disclosure applies equally well to the more generic types of UNIs, and as such, the present disclosure should be regarded as applying to UNIs in general where any UNI sub-type is mentioned, unless stated otherwise. Furthermore, although the Handle System, DOIs, and their supporting technologies and conventions, which are in use today, are a contemplated forum for the present invention, it should be noted that it is contemplated that the present invention may be applied to other forums based upon current and yet to be conceived conventions and systems.

### DOIs

Users employing DOIs to access information know they will resolve and access only associated information. In contrast to URLs that reference locations, DOIs are names for information, which can be used to look up that information's location and other attributes, as well as related services. It is envisioned that information may be any information as well as any computer-readable files, including e-books, music files, video files, electronic journals, software, smaller portions and/or combinations of any of the aforementioned content as well. It should be noted that since the electronic content will be made available over a communications network, hereinafter this application refers to such available information as being published on a communications network.

A DOI is a permanent and persistent identifier given to a piece of information made available on a communications network and registered in an electronic form, so that even if the location (i.e., URL), format, ownership, etc. of the content or associated data changes, users will be able to access the associated data. DOIs, or Handles, may be distributed to users in lieu of a URL. A user may access information associated with a particular DOI by selecting or entering the DOI in a Handle-enabled web browser much like a URL hyperlink. Many types of browsers may be enabled by way of browser plug-in software such as the Handle System plug-in available from www.cnri.org. Such an attempt to access DOI associated information triggers an automated process to look up a resource's current location. The current location of the resource is associated with the resource's DOI in a centrally managed directory made available by the Handle System, which in turn directs the user (i.e., the user's web browser) to the resource's current location. This direction is often accomplished by returning a current URL associated with the selected DOI and corresponding information.

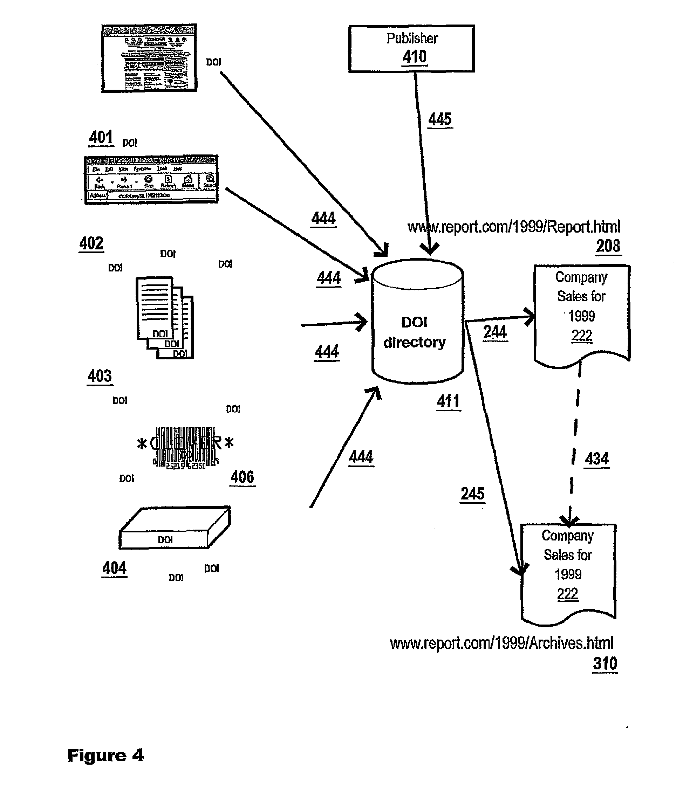

Figure 4 illustrates the access of information through DOIs in contrast to Figures 2 and 3 above. Initially, the information (report of "Company Sales for 1999) 222 is given a DOI through a registration process. Instead of employing URLs, users reference 444 the information using the DOI through web pages 401, typed entry in a web browser 402, documents 403, devices 404, barcodes 406, and/or the like. When users engage the DOI links 444, they are resolved in a centralized DOI directory 411 and the requesting users are given a URL link 244 to the information's 222 initial location (www.report.com/1999/Report.html) 208. Upon the information being moved 434 from its initial location (www.report.com/1999/Report.html) 208 to a new location (www.report.com/1999/Archives.html) 310, the publisher of the information 410 would inform the DOI centralized directory 445 of the new location for the information by sending an updated URL 245 referencing the new location. Thereafter, if users 401-404 attempt to access the information through the DOI links 444, the DOI directory will properly provide the new location 310 by way of the updated URL 245.

As noted above, DOIs may not only be used to identify information, but also smaller portions thereof. For example, according to the DOI system, it is possible for a book to have one DOI, while each of its chapters would have other unique DOIs to identify them; furthermore, each figure in the book may have yet other unique DOIs to identify them. In other words, according to the DOI system, it is possible to identify information with variable granularity as desired by the content publishers. Furthermore, it is envisioned that just as Universal Product Codes (commonly expressed as 'bar-codes' on consumer products) allow, for example, a supermarket's cash registers, inventory computers, financial systems, and distributors to automate the supply chain in the physical world, the present disclosure provides a mechanism for employing DOIs to empower all kinds of agents in the world of electronic publishing to automate the sale of digital content (and the licensing of rights to that content) across the Internet in an efficient manner, since each piece of saleable content would have associated with it a globally unique DOI, which could be used as a product identification code in transactions between agents.

### HANDLE STRUCTURE

The Handle System employs a pre-determined set of policies for efficient and user-friendly utilization thereof, some of which of which are listed below. The use of the Handle System for DOI resolution should ideally be free to users, with the costs of operation of the system possibly borne by the publishers. All DOIs are to be registered with a global DOI registry. Registrants are responsible for the maintenance of state data and metadata relating to DOIs that they have registered. The syntax of the DOI follows a standardized syntax. In use, the DOI will be an opaque string (dumb number). DOI registration agencies will manage the assignment of DOIs, their registration and the declaration of the metadata associated with them.

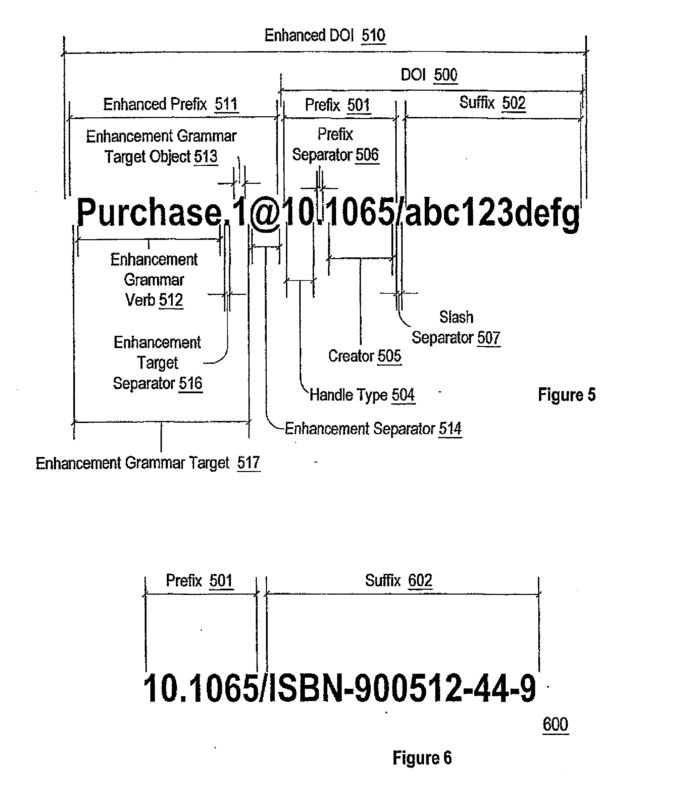

Figure 5 and 6 provide a schematic view of a Handle 600. A Handle 600 has two components, the prefix 501 and the suffix 602. The prefix 501 and the suffix 502 are separated by a forward slash 507. The Handle 500 may incorporate any printable characters from almost every major language written or used today. There is no specified limitation on the length of either the prefix 501 or the suffix 502. As a result, it is envisioned that there are an almost infinite number of Handles available. It is important to ensure that the combination of the prefix 501 and the suffix 502 is unique for supporting the integrity of the Handle System. Thus, the DOI registration agency will award a unique prefix 501 to a publisher. In one embodiment, the registration agency may put the responsibility on these publishers for ensuring that the suffix 502 assigned is unique as well. This may be achieved with a registration tool running on the user's client computer system. In another embodiment, the registration agency will ensure that the suffix 502 is unique by applying various suffix generation algorithms as discussed throughout this disclosure. The Registration Agency and the Handle System administrators will both verify uniqueness of any new Handle before depositing it in the Handle System. The Registration Agency deposits DOI records with the Handle System. The Handle System in turn services DOI resolution requests through a DOI directory.

The prefix 501 itself has two components separated by a prefix separator 506, which is a period. The first part of the Handle prefix is the Handle type 504. The second part of the Handle prefix is the Handle creator 505. The Handle type 504 identifies what type of Handle system is being used. When the Handle type 504 starts with a "10" the Handle is distinguished as being a DOI as opposed to any other implementation type of the Handle System. The next element of the prefix, separated by a period, is the Handle creator 505, which is a number (or string of characters) that is assigned to an organization that wishes to register DOI. Together, these two elements 504 and 505 form the unique publisher prefix portion of the DOI. There is no limitation placed on the number of Handle (or specifically DOI) prefixes that any organization may choose to apply for. As a result, a publishing company, for example, might have a single DOI prefix 501, or might have a different one for each of its journals, or one for each of its imprints. While generally a prefix 501 may be a simple numeric string, the scope of the Handle System is not limited thereby. Thus, a prefix 501 may also utilize alphabetical characters or any other characters.

The suffix 502 is a unique string of alphanumeric characters, which, in conjunction with a particular prefix 501, uniquely identifies a piece of information. It should be appreciated that the combination of the prefix 501 for a publisher and the unique suffix 502 provided by the publisher avoids the need for the centralized allocation of DOI numbers. The suffix 502 may be any alphanumeric string that the publisher chooses, so long as it is unique among all suffixes registered in conjunction with the publisher's prefix.

Figure 6 provides a view of another embodiment of the DOI 600, in which a textbook's ISBN number serves as the suffix 602. Consequently, where it is convenient, the publisher of the underlying content may choose to select as the suffix 602 any other identification code accorded to the original piece of content.

### Enhanced DOI

Figure 5 further illustrates an enhanced DOI 510 grammar. One non-limiting example embodiment of an enhancement to the DOI grammar is embodied as an enhanced prefix 511. However, it is fully contemplated that an alternative and/or complimentary enhanced suffix (not illustrated) may be similarly appended to the DOI 500. The enhanced prefix 511 is comprised of an enhancement grammar target 517 and enhancement separator 514, which is an "@" symbol, but it is understood any other character may be designated as the enhancement separator. The enhancement grammar target 517 may itself be any string of characters other than the enhancement separator 514. The enhancement grammar target 517 may be employed for the purpose of having the DOI 500 resolve to multiple versions of a specified information as will be described in greater detail throughout this disclosure. In a further enhanced embodiment, the enhancement grammar target 517 may itself be further comprised of an enhancement grammar verb 512 and enhancement grammar target object 513 separated by an enhancement target separator 516, e.g., a period. Of course the enhancement target separator 516 may be designated as any character(s). In one example embodiment, the enhancement grammar verb 512 acts as a modifier to select amongst a plurality of multiple resolution targets for a DOI, and the enhancement grammar target object 513 is a value passed to the target object and/or a Handle system resolution server for further action.

### HANDLE SYSTEM METADATA

A DOI 500 is merely an identification number that does not necessarily convey any information about its associated information. As a result, it is desirable to supplement the DOI with additional information regarding the addressed information to enable users to perform efficient and user-friendly searches for retrieving the desired content over a communications network. To allow easy identification of information, the present invention provides for the use of metadata, which is descriptive data about the identified information. While metadata may be any data structure that is associated with a DOI, according to one embodiment, the metadata will be comprised of a few basic fields that can accurately and succinctly identify the published information. According to this embodiment, the metadata will comprise an identifier associated with the entity from a legacy identifier scheme such as the International Standard Book Number (ISBN) for a book, title of the published content, type of content being published (such as book, music, video, etc.), whether the content is original or a derivation, a primary author of the content, the role of the primary author in creating the content, the name of the publisher, and/or the like. As different types of content may require different metadata for describing it, one aspect of the DOI system envisions the use of different metadata for different types of content.

According to one example embodiment, metadata will be made available to any user of the DOI system to enable them to find the basic description of the entity that any particular DOI identifies. This basic description will allow the user to understand some basic things about the entity that published the content or the content itself.

As a result, to find out what information the DOI identifies, it is desirable to resolve it, and then review associated metadata because the DOI links the metadata with the content it identifies and with other metadata about the same or related content. In one embodiment, the metadata allows for the recognition of the information identified by the DOI 500 as well as its unambiguous specification. The metadata will also allow for the interaction between the information and other contents in the network (and with metadata about those entities).

### DOI INFORMATION ACCESS

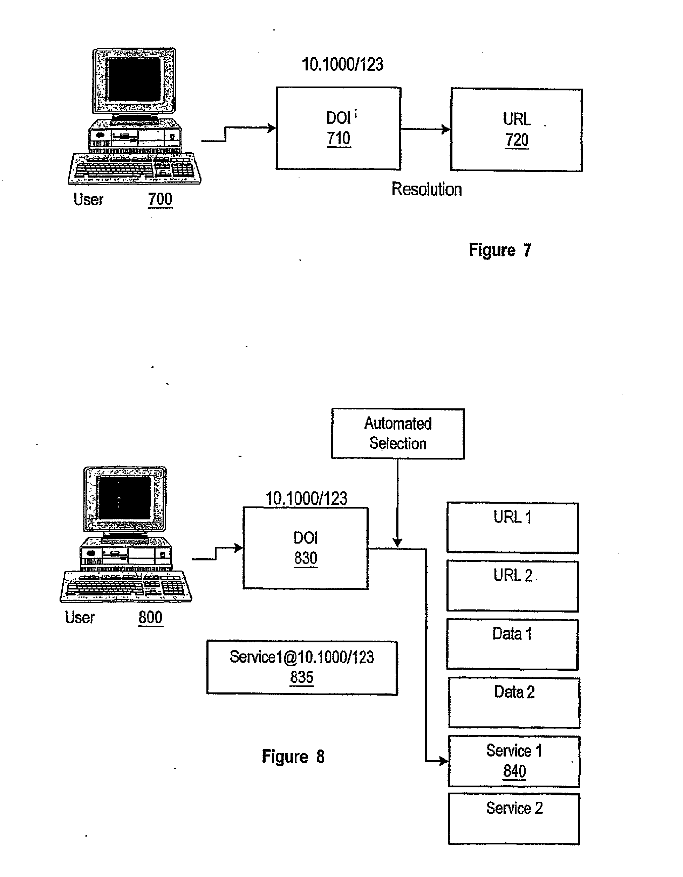

Figures 7 and 8 provide an overview of the resolution mechanism for allowing users to access the desired information by merely providing the DOI to the DOI Handle system. Resolution in the present context includes the submitting of an identifier to a network service and receiving in return one or more pieces of current information related to the identifier. According to one embodiment of the DOI system, shown in Figure 7, the user uses her web browser 700 client to point to content identified by a particular DOI 710. This DOI 710 has only one URL associated with it, and must resolve to that URL. As a result, when the user makes a request for underlying content identified by a particular DOI 710, the user is directed to URL 720, where the desired content lies.

As such, this mechanism allows the location of the information to be changed while maintaining the name of the entity as an actionable identifier. If the publisher changes the location of the content, the publisher must merely update the DOI's entry in the Handle System database to ensure that the existing DOI 710 points to the new location of the content. As a result, while the location of the content has changed, the DOI remains the same and users are able to access the content from its new location by using the existing DOI.

Figure 8 provides an overview of a DOI system where users may use a DOI for resolving a request for one piece of content, out of a plurality of available identical copies of the same piece of content that are identified by the same DOI, as well as the location of data about the piece of content, and services associated with the content (such as purchasing the content). Thus, the user uses the web browser 800 and provides the necessary DOI 830. The DOI 830 may be structured to describe the type of service desired 835. As a result, the DOI system is able to resolve the particular piece of content 840 that the user desires to access.

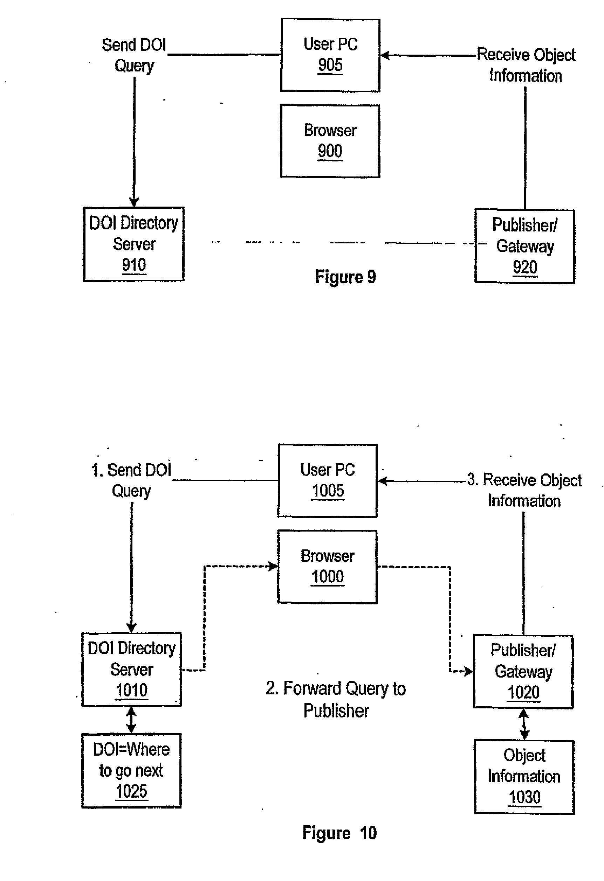

Figure 9 provides an overview of the sequence of actions that a user performs to access information, in accordance with the present invention. Initially, the user launches the browser client 900 on a computing device 905, such as personal computer, personal digital assistant (PDA), and/or the like. The user engages the browser 900 to make a DOI query. The DOI query is forwarded to the DOI Directory Server 910 over a communications network. The system of the DOI Directory Server 910 examines the DOI against the entries stored therein and forwards the appropriate URL to the browser 900 on the user's computer 900, in a manner that is invisible to the user. As a result, the browser is pointed to the desired content on a server with the appropriate publisher information 920. Finally, upon receipt of the request from the user's browser, the publisher 920 forwards the desired information to the user, which may be accessed in the browser client 900.

Figure 10 provides a more complete view of the sequence of actions that a user performs to access content information, as shown in Figure 9. As noted above, the user launches the browser client 1000 on a computing device 1005. The user engages the browser 1000 to make a DOI query. The DOI query is forwarded to the DOI Directory Server 1010 over the communications network. The system of the DOI Directory Server 1010 examines the DOI against the entries stored therein. As a result of the checking of the DOI against the entries stored in the DOI Directory Server 1010, the DOI Directory Server 1010 determines where the DOI must lead the user 1025. The appropriate URL for the content is automatically forwarded to the user's browser 1000, without any intermediate intervention or action by the user. As a result, the browser 1000 is pointed to the appropriate publisher 1020 whose server is addressed by the underlying URL. The URL is used by the publisher's server 1020 to determine the exact location for content desired by the user, and the publisher's server 1020 forwards the appropriate content 1030 to the user.

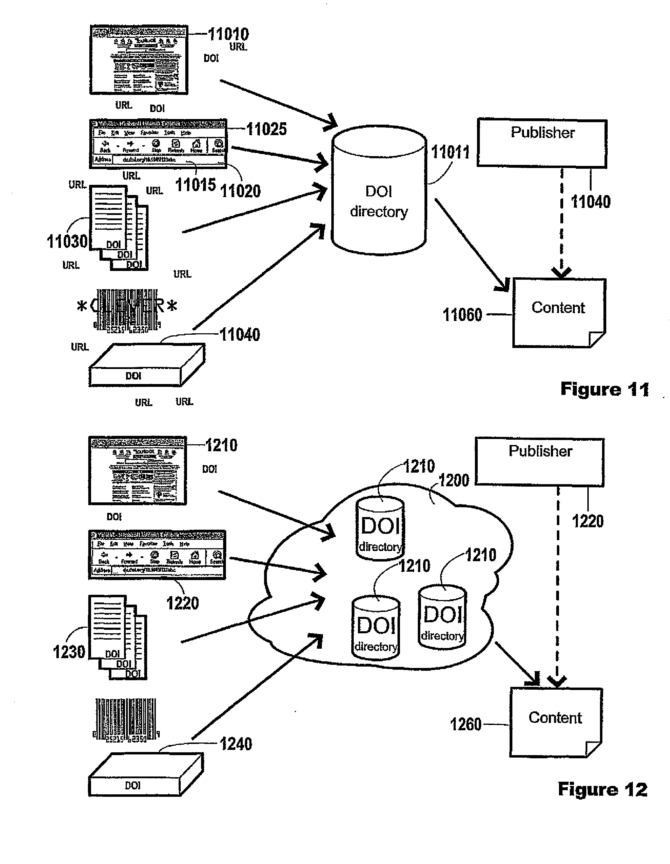

Figure 11 provides an overview of some of the exemplary mechanisms for accessing information over a communications network by resolving a DOI to obtain the URL where the desired content is located, in accordance with the present invention. According to one embodiment, the user may directly provide the DOI and the DOI system retrieves and forwards the appropriate content to the user by simply linking to the appropriate URL. According to another embodiment, the user may provide information related to some of the fields included in the metadata, whereupon a DOI lookup service identifies the appropriate DOI, which in turn may be resolved to the desired content's location. As shown in Figure 11, according to one embodiment, a search engine 11010 may be provided to a user. In one embodiment, the search engine is offered and disposed in communication with the registration agency's DOI and metadata database. In an alternative embodiment, a search engine such as www.google.com may be adapted to submit queries to the registration agency's databases. The user searches for the appropriate DOI by providing some identifying information to the search engine 11010. The search engine 11010 uses the identifying information provided and searches a database of metadata to retrieve the DOI associated with the provided metadata information. Thus the user conducting the search may be presented with returned DOIs from the metadata database and/or URLs resolved from said returned DOIs. The retrieved DOI is sent to the DOI directory 11011, which resolves the URL wherein the desired content is located by a publisher 11040. Finally, the user's browser is pointed to the appropriate content 11060.

According to another embodiment, the user may provide the DOI 11015 in the address window 11020 of a browser 11025. If the user's web browser is not capable of natively processing DOIs, then the DOI 11015 may contain the address of a proxy server for the DOI directory 11011, which in Figure 11 is "dx.doi.org." As a result, the browser is pointed to the DOI directory 11011 located at dx.doi.org, which resolves the URL at which the desired content is located by a publisher 11040 and points the user's browser thereto.

According to another embodiment, the DOI may be embedded in a document or some form of information 11030, whereupon clicking the DOI directs the user to the appropriate DOI directory 11011, which determines the URL at which the desired content is located and points the user's browser thereto.

According to another embodiment, the DOI may be provided on a memory 11040, such as a CD-ROM or a floppy disk, whereupon the memory may automatically, or upon being activated, direct the user to the appropriate DOI directory 11011, which resolves the URL at which the desired content is located and points the user's browser thereto.

According to yet another embodiment, the DOI may be provided in printed form to a user, who enters the DOI manually as above or by way of optical and/or mechanical peripheral input device.

Figure 12 provides an overview of another embodiment of the exemplary mechanisms for retrieving information over a communications network, whereupon the DOI system resolves a DOI to obtain the URL where the desired information is located. According to this embodiment, a plurality of DOI directories 1210 exist as a distributed DOI directory and form a Handle System 1200. In one embodiment, the distributed DOI directory acts and responds to requests as if it were a singular directory 11011. Otherwise resolutions take place similarly as in Figure 11.

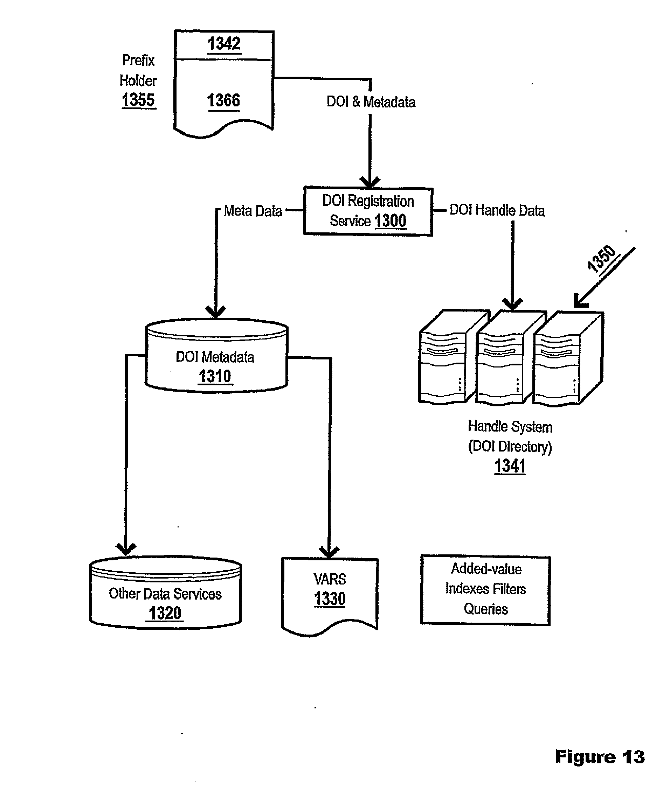

Figure 13 provides an overview of an exemplary DOI system, in accordance with the present invention, wherein the publishers, the DOI registration service and the Handle System collaborate together to create an efficient DOI system. The prefix holder 1355 may submit information to a DOI registration service 1300 comprising a DOI 1342 and associated metadata 1366. The prefix holder who has already been assigned a unique prefix 501, requests that a suffix 502 be assigned to a piece of content 1366. The registration service 1300 is responsible for parsing and/or reformatting the user's streams of submitted information 1342, 1366 for subsequent deposit in a Handle system 1350 and/or metadata database 1310. As noted above, the scope of the content that can be addressed using a DOI is unlimited. As a result, the content 1366 may comprise any information and work of authorship, including articles, books, music albums, or selected discrete portions thereof. In addition to providing a DOI 500, the publisher 1342 collects metadata for the content 1366. The metadata may comprise the content's DOI 500, a DOI genre, an identifier, title, type, origination, primary agent, agent's role, and/or the like. It may also comprise listings of associated services having to do with the identified piece of content offered by various parties, such as the locations of web pages where a piece of content may be purchased online.

Once the publisher 1342 has assigned the suffix 502 to the content 1366 and collected the necessary metadata, the DOI 500 and the metadata are transmitted to the DOI registration service 1300. The DOI registration service 1300 maintains a database of DOIs 500, metadata of all the registered content 1366, as well as the URL at which the content 1366 is located. According to the present invention, the DOI registration service 1300 forwards the metadata to a metadata database 1310, 1119c of Figure 1, which may or may not be integrally maintained by the DOI registration service 1300.

The DOI registration service 1300 may use the collected metadata for providing it to other data services 1320 or for providing value added resources 1330 to the users. In addition, the DOI registration service 1300 sends the appropriate DOI Handle data to the Handle System 1350, which may comprise a plurality of DOI Directory Servers 1341.

### HANDLE SYSTEM MULTIPLE RESOLUTION MODEL

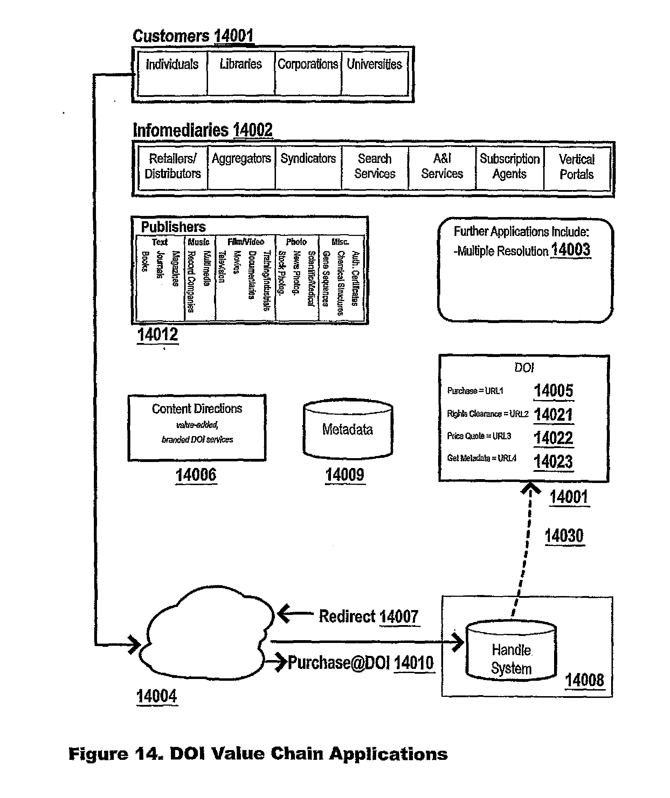

Figure 14 illustrates one non-limiting example of the IAMRS 14006 interacting with various entities. Publishers 14012 may wish to make their information available through different locations, in different formats, in different contexts, for different purposes and uses. In so doing, publishers may register a single DOI 14001 in an enhanced Handle system 14008 with multiple resolutions 14005, 14021-14023. In part, the enhanced system is a multiple resolution system. Publishers may wish to provide multiple resolutions for a DOI to enhance the use and access of their information to customers 14001 such as individuals, libraries, corporations, universities, and/or the like, and information resellers (infomediaries) 14002 such as retailers/distributors, aggregators, syndicators, search services, Abstracting & Indexing services, subscription agents, vertical portals, and/or the like. For example, retailers/distributors 14002 may require a publisher's information to be located on its servers so as to properly account and charge for access to the information; in such a case an enhanced DOI service request 14010 by customers 14001 through a communication network 14004 to an enhanced Handle system 14008 would select 14030 a PURCHASE record associated with URL1 14005. URL1 would then be redirected back to the customer 14007 through the communications network 14004. Publishers may also provide various locations for rights clearance 14021, price quotes 14022, and accessing metadata 14009, 14023.

### HANDLE SYSTEM REGISTRATION MODEL

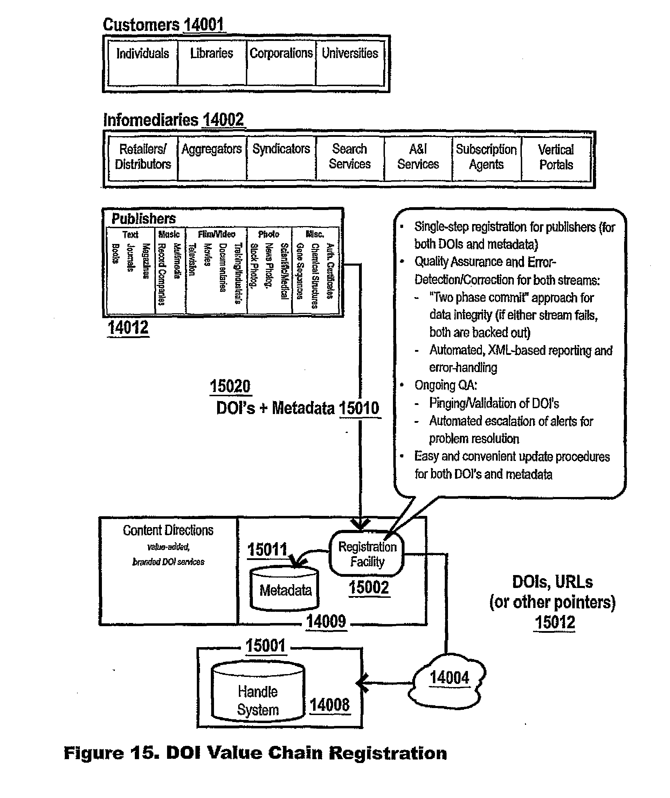

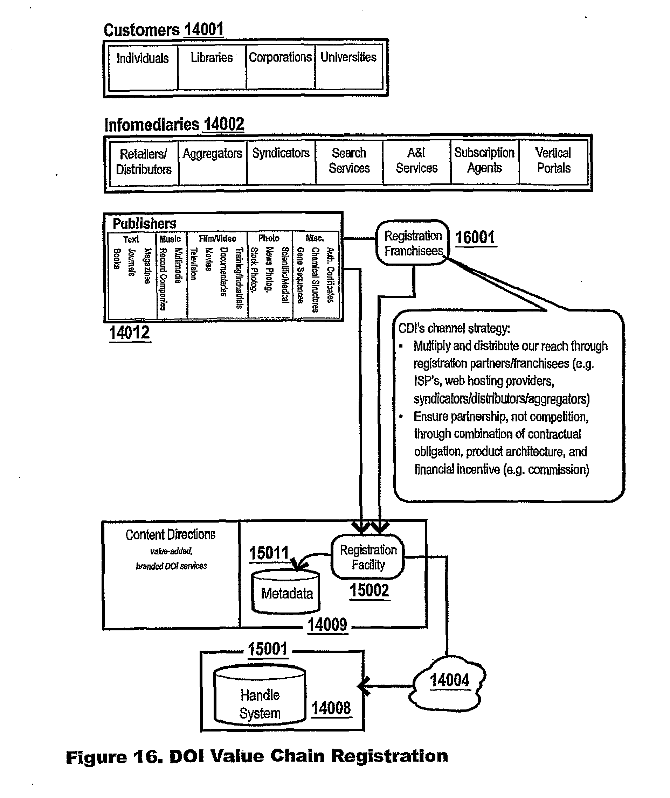

Figures 15 and 16 illustrate non-limiting examples of the IARS 15001 interacting with various entities. Figures 15 and 16 overview the environment depicted in Figure 14 highlighting the registration faculties 15002 of the IARS 15001. Publishers 14012 may wish to make their information available through different locations, in different formats, in different contexts, for different purposes and uses. In so doing, publishers may register a DOI 15020 and associated metadata 15010 in an enhanced Handle system 14008 and metadata database 14009 with a registration facility 15002. In one embodiment, the metadata is separated from the DOI 15020 at the registration facility 15002 and the metadata 15011 is sent to the metadata database 14009 in a first phase of a two phase commit procedure. In the second phase, the DOIs, URLs and any other associated pointers 15012 are separated from the metadata 15010 and sent with any security authorization information (e.g., a password) to the Handle system 14008 across a communications network 14004. In an alternative embodiment, a user may request to register a DOI without metadata so that it is not made public and/or not made available for searching; in one embodiment, a registration agency may charge the user for such an "unpublished DOI." Upon successful registration of both the associated metadata 15011 in the metadata database 14009 and the DOIs 15012 in the Handle system 14008, registration will be deemed successful. If either registration step fails, the associated data in the other step or steps will be removed from the database. The registration facility will provide XML or tag-based reporting and error handling with regard to this two-phase commit procedure, which will allow registrants to automate the handling of error conditions.

Figure 16 elaborates on the environment depicted in Figure 15. Figure 16 highlights that it is contemplated that various registration franchisees 16002 may process and accept DOI registrations from publishers 14012 and forward the registration requests to the registration facility 15002. The franchisees may be ISPs, web hosting providers, syndicators, distributors, aggregators, and/or the like. The various franchisees may extend the reach of the registration facility to obtain additional publishers, and provide financial incentives to partner with the registration facility while building upon the registration facility's infrastructure for registration (e.g., providing commissions). In one non-limiting embodiment, the registration facility will pay a commission to the franchisees (i.e., a percentage of revenue from every DOI registration brought to the registration facility by the franchisee). In such an embodiment, the franchisee accepts the registration request as a "store front," but actually passes the registration request back to a registration facility. The registration facility executes the registration and is paid directly by the registering user, and upon payment a commission is paid to the franchisee. In an alternative embodiment, the "store front" franchisees will accept payments from the registering users, and will forward payments for registration to the registration facility. In another non-limiting example embodiment, the franchisees may license registration technology from the registration service, operating substantially independently, but with information-sharing or other agreements in place between the registration service and the franchisee.

### REGISTRATION SYSTEM OVERVIEW

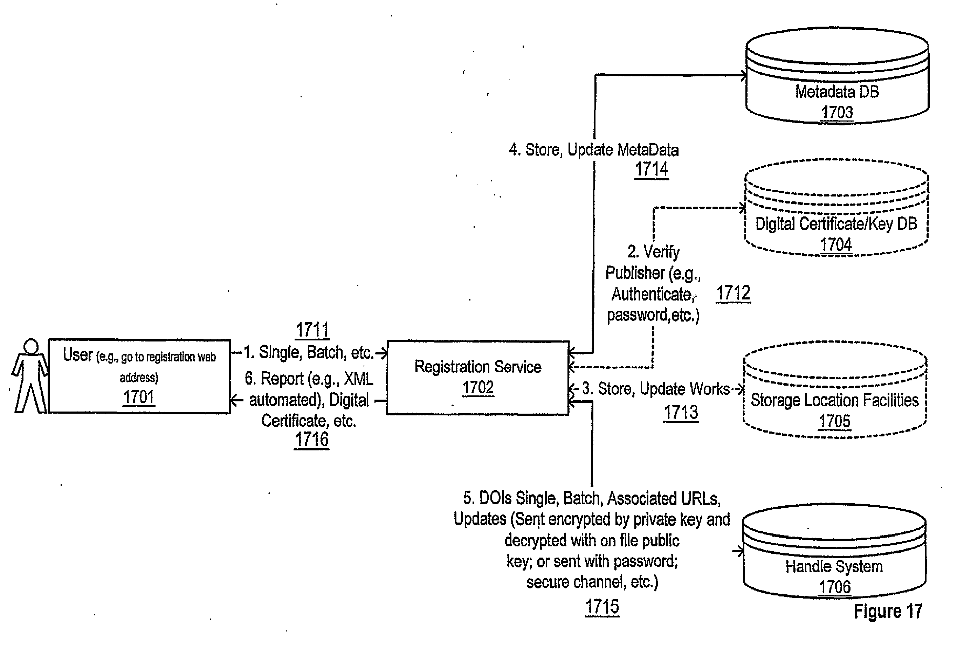

Figure 17 illustrates a non-limiting example of the IARS 1702 interacting with various entities in the registration of a Handle with the Handle System 1706. In one non-limiting example registration, a user 1701 may engage the IARS 1702 by submitting a request to register a DOI for information 1711. The user may do so by employing a registration tool as will be detailed further throughout the disclosure. The registration tool may be embodied as a web page or a client application and provide for the registration of DOIs singly and/or in batches. Upon providing the registration tool with the proper entries, or upon an automatic registration request, the registration tool will provide the registration service (i.e., a registration agency) with a request to register a DOI for specified information. The registration tool may pre-process the request in such a manner that DOI and associated location information are sent to the Handle system 1706 without processing by the registration service 1702 or the metadata database. Alternatively, the registration service may process the user's request into an acceptable format for the Handle system and metadata database 1703.

In one non-limiting example embodiment, upon the registration service 1702 obtaining the DOI registration request 1711 from the user 1701 and processing the request as may be necessary, the registration service may optionally verify 1712 that the user (e.g., publisher) is authorized to register DOIs. In one embodiment, the registration service may verify the publisher's identity by requiring the registration request 1711 to contain a password, digital certificate, be encrypted by private key and decrypted by a public key stored in a security authorization database 1704, and/or the like procedure to verify the publisher's identity. In this embodiment, the user (e.g., publisher) effects a secure transaction with the registration service.

In one non-limiting example embodiment, upon the registration service 1702 obtaining the DOI registration request 1711 from the user 1701 and processing the request as may be necessary, the registration service may optionally store and/or update 1713 the actual information at a storage location facility 1705 in memory. In this example embodiment, the user would delegate the task of storing the actual information for which she is registering a DOI by making such a request with the registration tool and submitting the information along with the request 1711. The registration service 1702 would in turn establish a location to store the passed information in memory at a storage location facility 1705. In one alternative embodiment, the storage location facility may be a content hosting service. In another alternative embodiment, the storage location facility may be a commercial reseller (e.g., an online bookseller such as Amazon.com and BN.com) The storage location facility may be part of the registration service 1702 and/or another entity disposed in communication with the registration service. In one example embodiment, the actual information passed by the user to the registration service may be converted into various formats as may be specified during the construction of a registration request with the registration tool by the user. This conversion may take place at the registration service 1702 by other entities operating the storage location facilities 1705, and/or intermediaries. In another embodiment, the information stored at the storage location facilities may be indexed or categorized and serve as a database complementing and/or obviating the need for the metadata database 1703 for searches resolving to DOIs in the Handle system. In one non-limiting embodiment, the index is created out of the full-text of the content by an indexing program executed. In an alternative embodiment, the index is created by a simple "harvesting" of the work's already existing index (e.g., a literal book index, which was already created) In an alternative embodiment, a harvesting of index information is based on the table of contents or otherwise derived from the content's XML structure or Document Type Definition (DTD) In another embodiment, index information is obtained through a categorization based on additional metadata furnished by the publisher; either explicitly by deriving it from publisher-supplied metadata indicating what other objects the current object is to be associated with, or indirectly deriving a catagorization based on rules that integrate into the registration process.

Upon the registration service 1702 obtaining the DOI registration request 1711 from the user 1701 and processing the request as may be necessary, the registration service may process out metadata and provide it for storage and/or updating 1714 in a metadata database 1703. In one embodiment employing a two phase commit process to ensure that either both or neither of the metadata and associated DOIs are made available, if the metadata is not successfully stored in the metadata database 1703, then an error will be generated preventing the registration process from continuing, and the associated DOIs will also not be registered until the error is resolved.

Upon and/or as the metadata 1714 is being stored 1714, 1703, the registration service 1702 may process out the DOIs (in singles or batches) and associated URLs and store and/or update them 1715 in the handle system. In one embodiment, the registration service will provide security authorization to register the DOIs (e.g., password, digital certificate, encrypting all or a portion of the DOI submission with a private key to be decrypted by a matching public key pair by the handle system, etc.). In such an embodiment, a secure transaction is effected by the registration service with the Handle system. Upon storage of the metadata 1714 and DOIs 1715, the registration service 1702 will provide the user with a report 1716. In one embodiment, the report may be in XML format to allow for automated parsing and response by the user's systems. The registration service 1702 may also affect the provision of security authorization mechanisms to the user (e.g., a private key or digital certificate pair to be complemented by a corresponding decryption counterpart to be stored in the security authorization database 1704).

### REGISTRATION SYSTEM_OVERVIEW

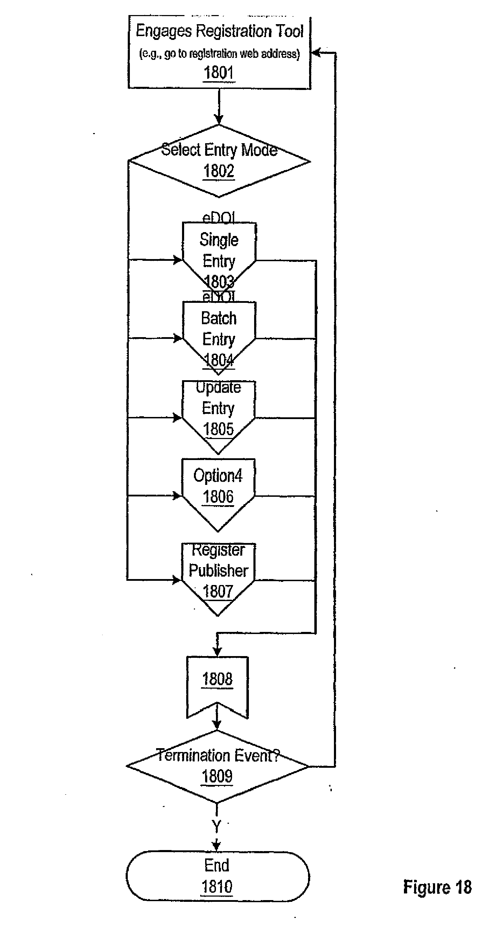

Figure 18 illustrates a non-limiting example of registration tool options. A registration tool enables users to register DOIs with the IARS. As will be described in greater detail throughout the disclosure, the registration tool may be embodied as web page on the IARS, as a plug-in for a word processor on a client, a stand alone client application, an applet disposed in communication with various content authoring systems (e.g., Quark), and/or the like. In alternative embodiments, the registration tool is an applet disposed in communication with content conversion services, content syndication services, content distribution services, and/or any other publishing services, whether offered through an ASP model (i.e., outsourced as a service, and/or run as a software application from an outsourced server) and/or executed by the publisher directly utilizing software provided by a third party.

In one non-limiting example embodiment, the registration tool is engaged 1801. The tool may be engaged by traversing a navigation location where a web page embodies the registration tool and executing on a web browser. Upon engaging the registration tool, the user may select an entry mode 1802. Various options 1806 may be provided for DOI registration. In one embodiment the user would be allowed to register a single DOI 1803, register DOIs in batches 1804, update entries in the handle system 1805 in batches or singly, register a publisher 1807, and/or the like. Upon selection and completion of one of the entry modes 1808, the registration tool may check for a termination event 1809. If a termination event occurs, program execution on the CPU will cease, otherwise, further entries may be obtained.

### HANDLE REGISTRATION TOOL.

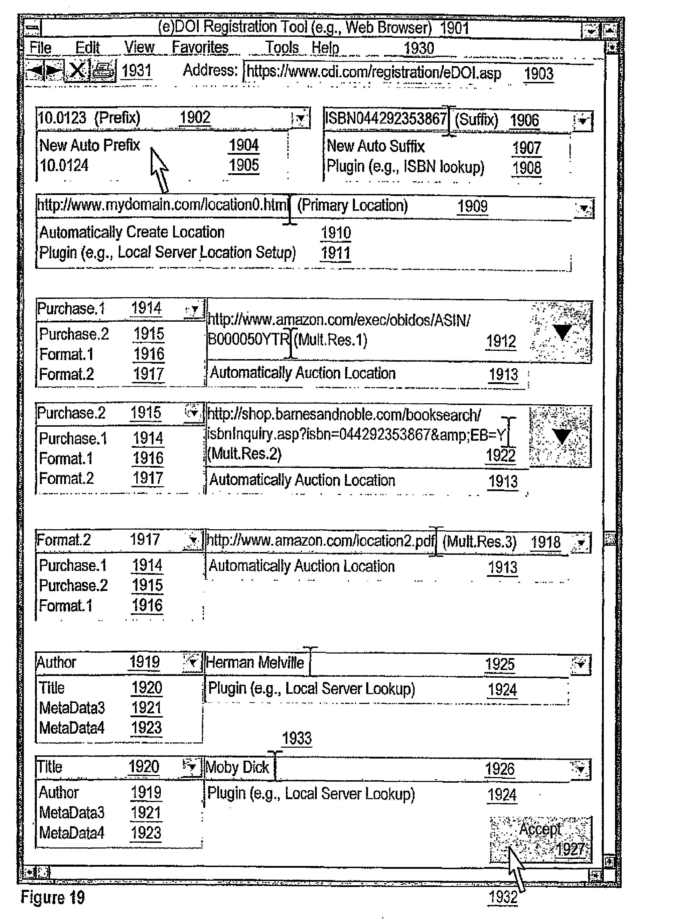

Figure 19 illustrates a non-limiting example of a registration tool 1901. A registration tool may be embodied in a web page 1901 to be executed through a web browser with various menus 1930, standard navigation and printing facilities 1931, and URL navigation facilities 1903. In this example, a secure connection to www.cdi.com/registration/eDOI.asp is the location where the registration tool is stored and accessed from. The registration tool may employ standard graphical user interface widgets such as text boxes, pop-up menus, and/or the like. The widgets are configured to respond to user controlled cursor selections 1932, and/or text insertion tools 1933. It is understood that various user interface widgets may be used to substitute for the functionality of any example employed widgets herein. For example, the pop-up text entry menu 1902 may be replaced with a plain text field, and/or the like, herein and throughout the disclosure.

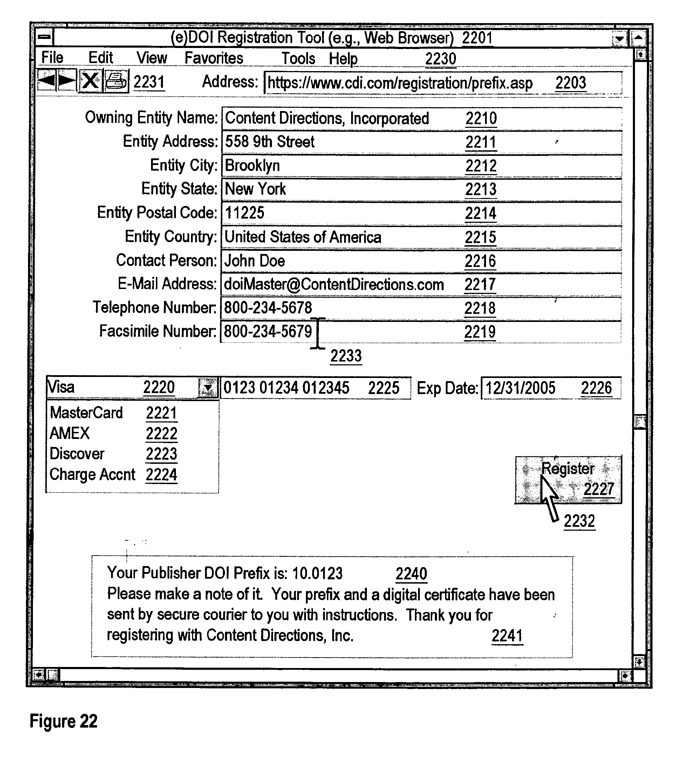

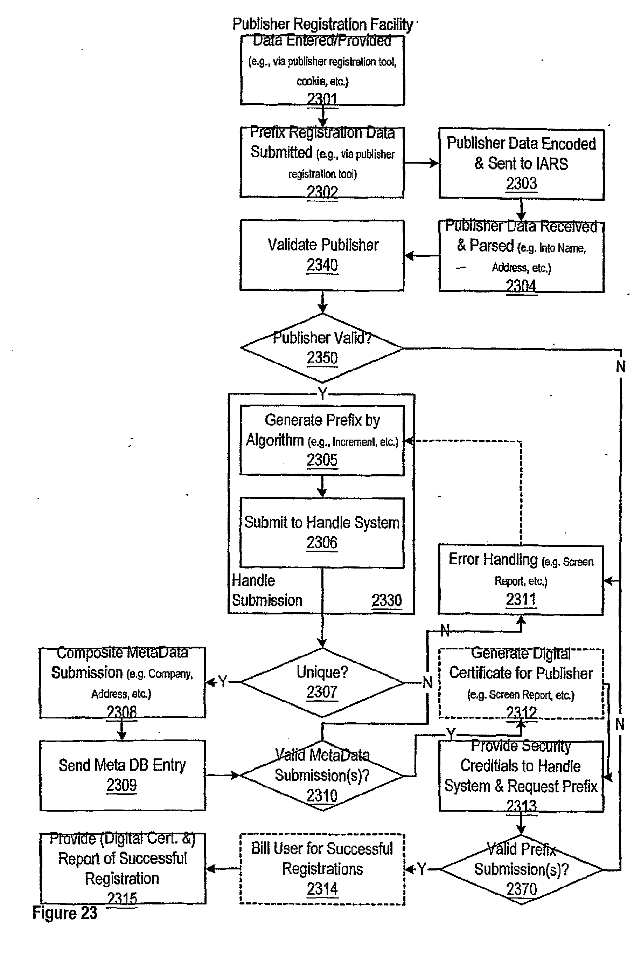

In one example embodiment, the user may enter a DOI prefix by typing it into a text pop-up menu field 1902. In an alternative embodiment, the user may select options from the pop-up menu 1904, 1905. One option may simply be to select another prefix 1905 (for example 10.0124) that may have already been registered to the user (i.e., publisher). In an alternative embodiment, the user may select a selection to automatically create a new prefix 1904, which will flag the IARS or registration tool to initiate a publisher registration facility as described later in figures 22 and 23.

The user must also specify a DOI suffix similarly into a pop-up menu field 1906. The combination of the suffix and prefix must be unique to the handle system. The user may enter any value in the suffix field 1906, but the IARS must ensure uniqueness of the resulting DOI, and will reject any entries that are not unique. The user may alternatively specify that a new suffix be automatically generated by the IARS 1907. This may be accomplished by creating a flag that will be interpreted by the IARS and cause the IARS to generate the suffix according to an algorithm (e.g., incrementing the previous suffix created by a value of one, etc.). In an alternative embodiment, the registration tool may employ a plug-in architecture that allows the user to look up values from local databases or storage devices based on ISBN values, and/or the like.

The user may also specify one or more locations where information that will be associated with the DOI may be found 1909. The user may enter any value in the primary location field 1909. The user may alternatively specify that a new location be automatically provided by the IARS 1910. This may be accomplished by creating a flag that will be interpreted by the IARS and cause the IARS to allocate space in a storage facility, and/or affect the allocation of memory in a third party storage facility. When a location is automatically being created, the registration tool must be supplied with the current location of information (e.g., C:\My Documents\MyFile.doc), or with the information itself (e.g., as a stream of data), so that the registration tool may transfer the contents of the information to the storage facility where it will be made available. In an alternative embodiment, the registration tool may employ a plug-in architecture that allows the user to move the information to a local server for access 1911, and/or the like.

The user may also specify multiple resolution locations where information that will be associated with the DOI may be found 1914, 1915, 1916, 1917. The user may enter any value in the multiple resolution location fields 1912, 1922, 1918. The user may alternatively specify that a new location be automatically provided by the IARS 1913 through an automatic auction location feature. This may be accomplished by creating a flag that will be interpreted by the IARS and cause the IARS to allocate space in a storage facility, and/or affect the allocation of memory in a third party storage facility. When a location is automatically being created, the registration tool must be supplied with the current location of information (e.g., C:\My Documents\MyFile.doc) or with the information itself, (e.g., as a stream of data), so that the registration tool may transfer the contents of the information to the storage facility where it will be made available. In an alternative embodiment, the IARS may inform the registration tool and subsequently the user of rates to obtain storage space, or even offers to pay to house the information. The multiple resolution addresses 1912, 1922, 1918 may be associated with various respective DOI enhancement grammar targets 1914-1917. For example, a user may select and/or enter that an enhanced DOI with an enhanced grammar target of "Purchase. I" 1914 resolve to a target of "http://www.amazon-com/exec/obidos/ASIN/B000050YTR". Also, the enhanced grammar targets may specify alternative formats to embody the DOI referenced information. For example, a user may select and/or enter that an enhanced DOI with an enhanced grammar target of "Format.2" 1917 resolve to a file in PDF format at "http://www.amazon.com/localion2.pdf". When specifying alternative formats, the registration tool may create a flag that will be interpreted by the IARS and cause the IARS to affect the conversion of the information into the required format before it is stored. In an alternative embodiment, the registration tool may employ a plug-in architecture that allows the user to convert formats locally, and/or the like.

The user may also specify metadata information to be associated with the DOI and to be stored in a metadata database. The user may enter such metadata information into registration tool. The user may enter values in metadata fields 1925, 1926. The values entered in the metadata fields 1925, 1926 correspond to their respective field types 1919-1921, 1923. For example, a user may enter "Herman Melville" 1925 into the metadata text field for the "Author" metadata field type 1919. In an alternative embodiment, the registration tool may employ a plug-in architecture that allows the registration tool to automatically look up such information from a local lookup server 1924 (e.g., based on ISBN through a local database), and/or the like.

Upon entering a DOI prefix 1902, suffix, 1906, an associated location for the information 1909, any associated multiple resolution locations for information, and any other associated metadata, the user may engage an "Accept" button 1927 and/or like facility that will either add the entered data to a batch file and/or send the entered information to an IARS for registering the DOI. The information entered into the DOI registration tool 1901 may be parsed into various formats suitable for registration with the handle system.

In an alternative embodiment, fields may be provided for billing information such as those found in figure 22, 2220, 2225, 2226 that will engage a payment and billing system to charge for the use of the registration facility.

### CONTENT AUTHORING TOOLS

### Registration Authoring Tool

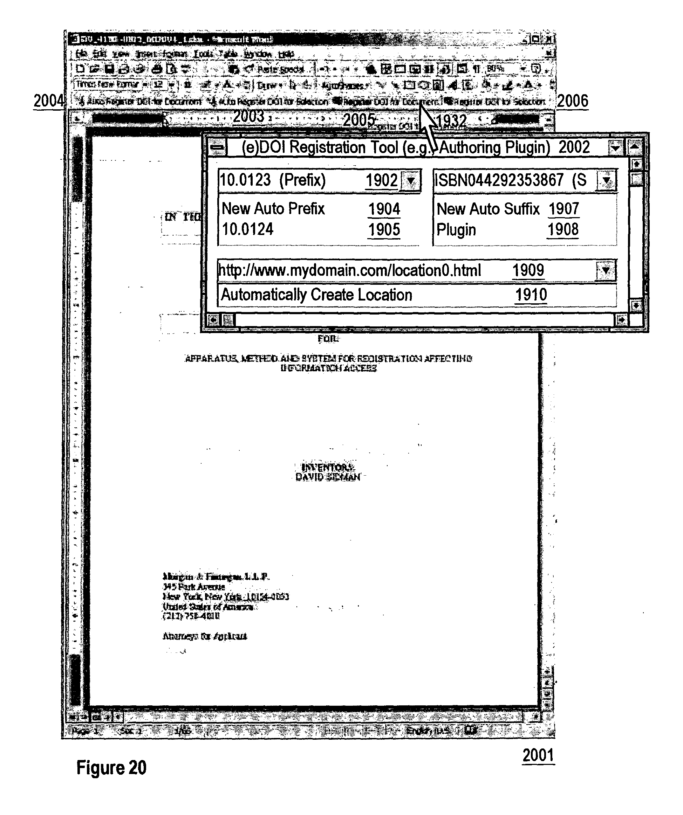

Figure 20 illustrates an alternative embodiment of a registration tool 2002. The registration tool may be embodied as a plug-in with a content creation tool such as Microsoft Word, Quark Xpress, and/or the like facility through provided APIs. The registration tool may be configured similarly as was described in figure 19, providing facilities to enter a DOI prefix 1902, suffix, and associated location of information 1909. Of course, all the features of the registration tool available in the web form embodiment of Figure 19 may also be made available in the authoring plug-in version 2002. For example, the authoring plug-in may also automatically generate new prefixes 1904, and suffixes 1907, provide a plug-in architecture itself 1908, automatically affect the provision of storage locations 1910, and have pre-configured values in pop-up lists 1905, and/or the like.

The registration tool may be activated through the selection of buttons and/or like engagement facilities 2003-2006 through user selection 1932. In one embodiment, the user may register a DOI for an entire document 2005 by selecting a button 2005, which in turn will cause the DOI registration tool 2002 to appear and accept entries and selections to be associated with the working document 2001. In an alternative embodiment, a user may simply highlight a portion of the working document 2001, and register a DOI for only that selected portion of the document by selecting the "Register DOI for Selection" button 2006. In an alternative embodiment, a user may highlight a portion of the document, and then select a menu (e.g., "Edit," "Format," "Tools," and/or the like) in a user interface that then engage the DOI tagging functionality of the registration tool by highlighting and making a selection (e.g., "Tag as DOI object," "Label with a DOI," "Flag with DOI," and/or the like) to register a DOI for the highlighted portion of the document and insert and tag the document with a DOI link. In an alternative embodiment, the user may automatically register a DOI for the document 2004 or document selection 2003 by selecting an appropriate button. In an alternative embodiment, the user may automatically register all the DOIs for various components of the document by invoking a feature or function (e.g., automatic table-of-contents generation) that already exists within the native application software for that document and is capable of reading the document's structure, whether that structure is expressed in XML or in any other document structuring language, whether standard or proprietary; the user would then create and assign identifying numbers to each of those components in either an automated or a manual way, as already described. Engaging the automatic registration facility will automatically send the information to an accessible location and auto-generate the DOI by having all the components of a DOI automatically generated. Such automatic generation allows a user to forgo the data entry and forgo the DOI registration tool window 2002. Furthermore, certain information such as, but not limited to billing information, may be saved in preference files, cookies, and/or the like and be automatically retrieved during the automated registration process.

### Authoring Utility

In one non-limiting example method of using the DOI registration tool, a user (e.g., author, editor, and/or the like) highlights a portion of a document and simply clicks on an "Edit" menu to select a "Tag as DOI Object" selection. The authoring software is adapted by the DOI registration tool (i.e., through plug-in, API, and/or the like) to record an internal object ID for the object. This tagging within the document is achieved similarly to the way that Microsoft Word currently allows the tagging of document sections for purposes of creating an automatic table of contents or index. Of course the tagging may be achieved in numerous ways. In an alternative embodiment, tagging is achieved by simply wrapping selected portions of a document in HTML, XML, and/or the like tags. In one embodiment, the wrapping may be affected by simply adding the requisite text before and after the highlighted portion of the document. In one embodiment, no DOI is actually registered with the Handle System, but rather a Provisional DOI is created. The provisional DOI would be written to a separate file, using the author or publisher's standard DOI numbering scheme (and/or alternatively selected from a choice of predefined templates). The provisional DOI is assigned default metadata already specified in the environment and/or document (such as the author's name, company for which the author is working, latest revision date, and/or the like). This provisional DOI is then saved for subsequent registration by a DOI registration tool by itself or in batches with other provisional DOIs.

In an alternative embodiment, a separate software utility harvests all unregistered DOIs collected from external files, a single batch file, a database, and/or the like. Thereafter, the harvest utility batches the provisional DOIs together for actual registration with a registration agency. At the point just prior to the actual registration transmission, the harvest utility allows for any appropriate changes in the numbering scheme, changes in the metadata, and specification of the URLs.

### DOI Revision Control System

In one non-limiting example, both the DOI registration tool and harvest utility (i.e., DOI authoring tools) have robust administrative features. DOI authoring tools log and track changes between current and past versions of a work. Tracking of changes may be accomplished by integrating Revision Control System (RCS) functionality as may be found in many Unix development systems into the DOI authoring tools through APIs, and/or the like. Each subsequent version of a work, in addition to having a version number, will have a provisional DOI assigned to it. In an alternative embodiment, the RCS is configured so that its version numbers issue valid DOIs as iterative versions numbers for purposes of DOI version tracking of the work. Such RCS functionality allows the user to submit and/or register DOIs for any or all versions of a work, and/or only a final version in a manner similar to reconstructing any particular version in a non-DOI enabled RCS. Such DOI enabled RCS functionality is useful as it allows the user to register DOIs with any desired level of granularity with regard to iterative versions of a work. Such DOI enabled RCS functionality also provides the ability to: make global changes in numbering and metadata across all DOIs in any provisional DOI files (i.e., harvest files); log registration transmissions; and may facilitate receiving, parsing, and acting upon error messages that might come back from a registration agency should there be a problem with the actual registration.

### IARS REGISTRATION FACILITY

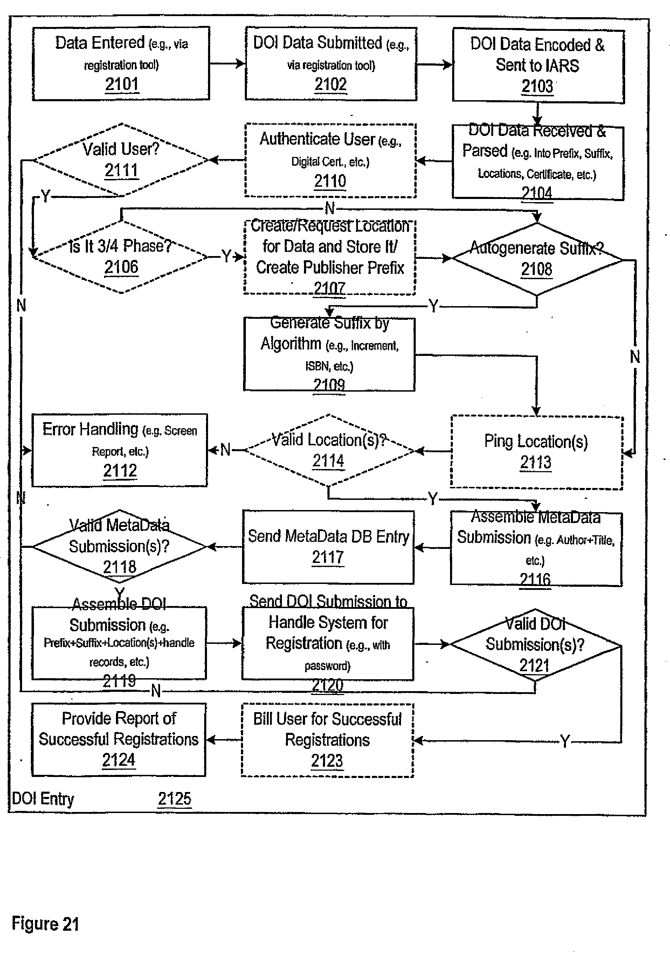

Figure 21 illustrates one non-limiting example flow diagram of an IARS registration facility. A DOI entry 2125 is made from a user submission to an IARS and in turn to the handle system. Initially data is entered into a registration tool 2101. The DOI registration request is then submitted from the registration tool 2102. The registration tool encodes the entered registration information and provides it to an IARS (i.e., registration service) 2103. The IARS obtains and parses the DOI registration request 2104. Frequently the request comprises a prefix, suffix, location address for the information, and security authorization information (e.g., a password). Alternatively, the request may also include flags to automatically generate a prefix, suffix, location for information, metadata, multiple resolution options, the information itself, and/or the like. Upon obtaining the request and parsing it into its components 2104, the IARS may optionally authenticate the user 2110. This may be done through various security mechanisms such as a password, digital certificate, and/or the like. If the authentication fails, and the user is not determined to be valid 2111, then the IARS will engage an error handling routine 2112 that may provide a screen report. It is important to note that the error reporting may be generated employing XML and/or structured tagging, object method messaging, and/or other forms of message passing that may be provided to the user and/or the user's systems for automated interpretation by the user's systems, thereby enabling automated system responses.

Upon obtaining the request and parsing it into its components 2104, the IARS may optionally determine if this registration will include a three or four phase registration process 2106. If the user requested that a DOI prefix be automatically generated, or that a storage location be automatically created to hold the DOI associated information, then respectively, such requests will be fulfilled 2107. Upon interpreting a request for storage facilities was requested, the IARS may affect the allocation of memory to store information obtained from the user. Also, upon obtaining a request to automatically create a publisher prefix, the IARS may automatically engage a prefix registration facility Figures 22-23, and/or obtain such information from cookies or a record for the publisher maintained in a publisher database 1119e of Figure 1.

Upon obtaining the request and parsing it into its components 2104, the IARS determines if the user specified the IARS to automatically generate a DOI suffix. If the user did specify that the IARS generate a suffix automatically, the IARS will generate the DOI suffix by algorithm 2109. In one non-limiting example embodiment, the IARS simply increments the last generated DOI suffix for the particular DOI prefix by one. In alternative embodiments, lookups to ISBN databases (and/or other industry-standard or proprietary numbering system databases) may return ISBNs (and/or other industry-standard or proprietary numbers), which would form the basis for unique suffixes. Thereafter, or if the user did not specify that the IARS generate a suffix automatically, i.e., the user specified her own DOI suffix, then the IARS may optionally ping the location(s) specified and/or automatically created 2107 to determine if the information is accessible 2113. If the locations are not valid, an error handling routine is engaged 2112 to generate an error report, correct the error if possible, and/or continue execution.

Upon establishing a DOI suffix 2108, 2109, a metadata submission is assembled 2116. The submission is assembled from metadata parsed from the DOI registration request 2104. Values for metadata type field such as "Author" and "Title" are composed and provided for entry to a metadata database 2117. If the metadata is not successfully submitted 2118, then an error is generated 2112. In one embodiment, submitted metadata will be subject to "data scrubbing" wherein discernable errors are corrected. For example, common spelling mistakes may be corrected (e.g., "Cchicaog" is replaced with "Chicago" in a city metadata field). In another alternative embodiment, if metadata is not successfully entered, the registration process will still continue and program flow will resume and continue as if the metadata submission was successful 2118, though the program may optionally present a warning that a non-fatal error has occurred. If the metadata is successfully submitted to the metadata database, then the first phase of a two phase commit process is successful.

Upon valid metadata submission 2118 or return from an error 2112, the IARS will assemble a DOI submission for the handle system 2119. The handle submission may comprise a DOI prefix, suffix, associated location(s), and optionally handle records, and/or the like. A submission may employ batch submission language for handle creation by formatting the submission into a batch submission format employing "CREATE" commands and/or the like. Multiple single registrations may be compiled into batch files for submission to the handle system. Upon compiling the DOI submission(s), they are provided to the handle system for registration 2120. The submission may require a password, digital certificate, decryption key, and/or like security authorization facility to allow for successful entry with the handle system. Upon providing the handle system with the DOI submission, if there are invalid DOI submissions, then those individual DOIs are not registered, an error is generated 2112, and the metadata corresponding to those DOIs is "backed-out," or removed, from the metadata database. If the DOI submission 2121 is successful, the IARS may optionally bill the user 2123 for the successful registration. Upon valid submission of the DOI, the second phase of the two-phase commit process is complete. If the metadata is not successfully submitted to the metadata database, no DOI submission will be made until the metadata submission error is rectified. Upon valid submission of the DOI 2121, the IARS may provide a report of successful registrations 2124 to the user. In an alternative embodiment, the two phase commit functionality may be changed so that first a DOI must be successfully submitted and registered with the Handle System before metadata is submitted to metadata database. In yet another embodiment, both portions of the two-phase commitment functionality may occur simultaneously and execute as independent threads and/or processes, wherein error-trapping rules will govern ultimate effectuation and registration of both the metadata and DOI.

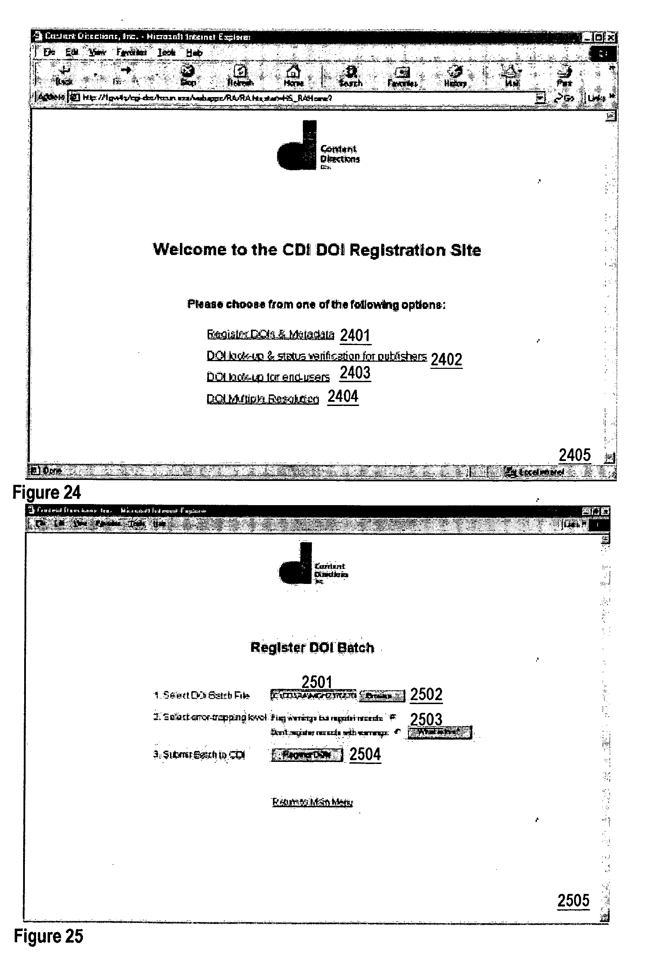

In one embodiment, error handling 2112 trapping levels may be specified by the user (as is also described in Figure 25). In such an embodiment, prior to submitting DOI(s) for registration, a user would specifying that errors generated from either or both portions of a two-phase commit process would prevent or alternatively not prevent registration. Thus, for example, a user might specify that errors in registering metadata should not prevent registering a DOI with the handle system. In an alternative example, a user might specify that errors in registering a DOI should not prevent registering metadata with a metadata database. Of course, such error trapping options may be expanded to include third and fourth phase commit options such as if storage was automatically created for information and/or if a publisher prefix was created automatically for a user.

### PUBLISHER PREFIX REGISTRATION TOOL

Figure 22 illustrates a non-limiting example of a publisher prefix registration tool 2201. A prefix registration tool may be embodied in a web page 2201 to be executed through a web browser with various menus 2230, standard navigation and printing facilities 2231, and URL navigation facilities 2203. In this example, a secure connection to www.cdi.com/registration/prefix.asp is the location where the prefix registration tool is stored and accessed from. The prefix registration tool may employ standard graphical user interface widgets such as text boxes, pop-up menus, and/or the like. The widgets are configured to respond to user controlled cursor selections 2232, and/or text insertion tools 2233. It is understood that various user interface widgets may be used to substitute for the functionality of any example widgets employed herein. For example, the pop-up text entry menu 2220 may be replaced with a plain text field, and/or the like, herein and throughout the disclosure.

In one example embodiment, the registration tool provides the user fields to enter billing and/or contact information such as: the name of the entity to own the publisher prefix 2210, the entity's address 2211, the entity's city 2212, the entity's state 2213, the entity's postal code, the entity's country, the contact person for the entity 2216, a contact E-mail address 2217, a contact telephone number 2218, facsimile number 2219, and/or the like. In another embodiment, the registration tool provides billing

In one example embodiment, the registration tool provides the user fields to enter billing information such as: a payment form field pop-up 2220 allowing the user to select amongst several payment options, and accompanying account number field 2225, and expiration date field 2226.

Upon a user supplying any required contact and billing information, the user may engage the "Register" button 2227 and/or like submission facility. Upon successful submission of the request for a publisher prefix, the user may obtain a report from the IARS 2240, 2241 informing them of their publisher prefix 2240 and any further instructions 2241. In one alternative embodiment, the IARS will supply the user with a digital certificate, password, and/or like security authorization vehicles to enable them to register DOIs under the publisher prefix 2241.

In an alternative embodiment, a preference file, cookie, database record, and/or the like may be stored containing the user's contact/billing and security authorization information, and thus allowing for automatic publisher prefix generation by simply the reading of the preference file without requiring the user to enter information into the prefix registration tool 2201.

### IARS REGISTRATION FACILITY

Figure 23 illustrates one non-limiting example flow diagram of an IARS prefix registration facility. Data is provided to the prefix registration facility 2301. In one embodiment, the prefix registration tool of Figure 22 is employed by a user to generate data for provision to the IARS prefix registration facility 2301. In an alternative embodiment, publisher information is provided by cookie, preference file, database record, and/or the like. Upon submitting the publisher information and request for a publisher prefix 2302, the prefix registration tool of Figure 22 encodes and sends the data to an IARS 2303. The IARS obtains the publisher data and parses the data into tokens (e.g., publisher name, address, etc.) 2304. Upon parsing the publisher information, the publisher is validated with publisher security authorization information 2340. The security authorization information may be a password, digital certificate, encryption keyed data, and/or the like. If the publisher is not validated 2350, an error is generated 2311. If the publisher is valid 2350, prefix generation continues 2330.

Prefix generation may be accomplished through the Handle System through manual paperwork submission, or automated through the IARS. In one example embodiment, a prefix is generated by employing an algorithm. One example algorithm is to simply increment by one the last created prefix 2305. Upon generating a prefix, it is submitted to the handle system 2306 for system wide affectation. If the prefix is not unique 2307, an error is generated 2311. Upon generating a unique 2307 prefix, metadata is assembled for the submission 2308. In one example embodiment, the company name, address, etc. is to be submitted and deposited into a metadata database 2309 to be associated with the unique prefix, which will act as a key field for such information. Upon providing the metadata 2309, the IARS determines if the metadata was successfully submitted 2310. If the metadata was not successfully submitted 2310, then an error is generated 2311. Two-phase commit error handling may be applied similarly as with error handling in Figure 21.

If the metadata submission is successful 2310, then a form of security authorization may be provided 2312 for the user (e.g., password, digital certificate, and/or the like). Upon successfully submitting metadata 2310, the IARS will request the prefix from the handle system, and provide the handle system with any requisite security authorization (e.g., password, digital certificate, and/or the like) 2313. If the request for the prefix is rejected by the handle system 2370, a report will be generated 2311. If the prefix submission was valid 2370, then optionally, the IARS may bill the user for successful registration of the prefix. If the prefix submission was valid 2370, then the IARS may provide a report of successful registration and any generated security authorization 2312 to the user 2315.

### IARS OPTIONS

Figure 24 illustrates one non-limiting example of IARS options. In one embodiment, the IARS allows users to register DOIs and metadata 2401, conduct lookups for DOI related information by publishers 2402, conduct lookups for DOI related information by end users 2403, and view multiple resolutions for DOI related information 2404 in a web browser 2405.

### BATCH REGISTRATION FACILITY

### Batch Registration Tool

Figure 25 illustrates one non-limiting example of IARS batch DOI registration tool. In one embodiment, the IARS allows users to select a local batch file 2501, 2502. The batch file's local location may be keyed in as a file path 2501, or found through a browse button 2502 and selection panel (not pictured). Different degrees of error trapping may be selected for the batch file 2503. In one embodiment, the user may prevent records in the batch file with warnings from being registered, or alternatively registering records with errors, and simply flagging the error (i.e., if obscure metadata type fields, e.g., author's birthday, are not properly saved in a metadata database, DOI registration will continue despite an error flag). Upon selecting the batch file and error trapping level, the batch file may be submitted for registration to the IARS registration facility by engaging the "Register DOIs" button and/or like submission facility 2504.

In one embodiment, the batch file itself may be created by hand and provided to the IARS by FTP mechanism. In an alternative embodiment, the batch file may be compiled from numerous single DOI registration requests such as described in Figure 21. Alternatively, a batch entry facility may compile batches of DOI registration requests.

### Batch Registration Facility

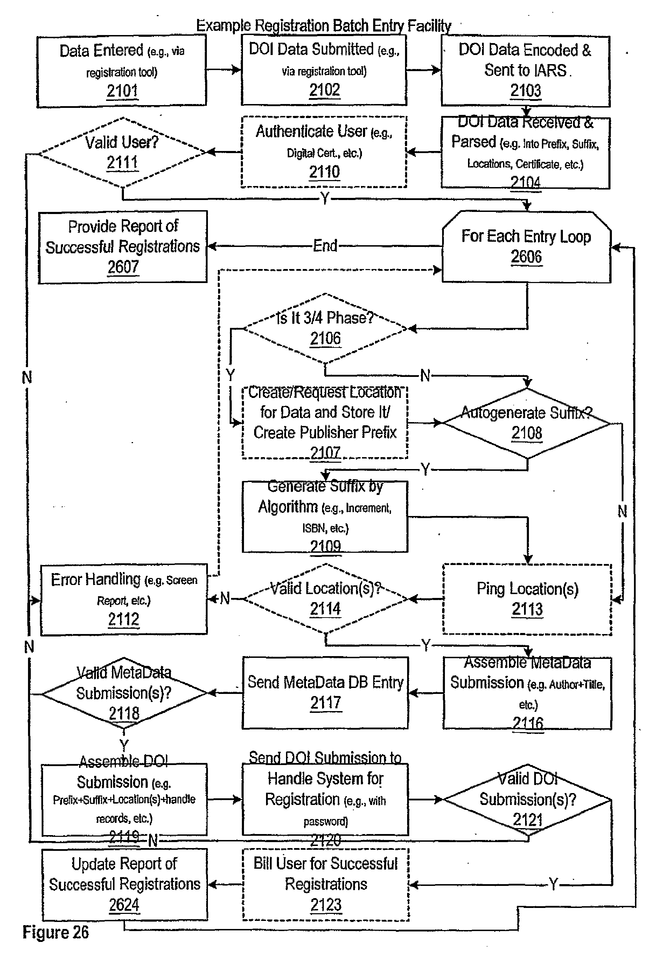

Figure 26 illustrates one non-limiting example of an IARS batch registration facility. The IARS batch registration facility of Figure 26 works similarly to the facility described in Figure 21. The IARS may be configured to process single and/or batches of DOI registration requests. The major difference from Figure 21 is that Figure 26 loops for each entry in a batch file 2606 upon having received and parsed the DOI batch file 2104. Upon entry into the loop 2606, registration for each batch entry proceeds similarly to that described in Figure 21. Upon valid submission of a DOI entry from a batch 2121, the batch registration facility will update a report of successful registrations 2624 from the batch, and program flow will continue to iterate for each of the remaining entries in the batch file 2506. Upon successfully iterating through all the entries of the batch file for DOI registration 2606, a full report of successful registrations is provided to the user 2607 including any errors. It should be noted that the actual sending and submission of metadata and DOIs 2117, 2121 may be moved outside the loop 2606, aggregated in a batch file, and submitted at once to the metadata database and/or handle system, respectively, while maintaining record-level two phase commit functionality (i.e., if either the metadata or DOI portion of any given submission in a batch fails, both portions will be removed from their respective databases.)

### Batch File Format

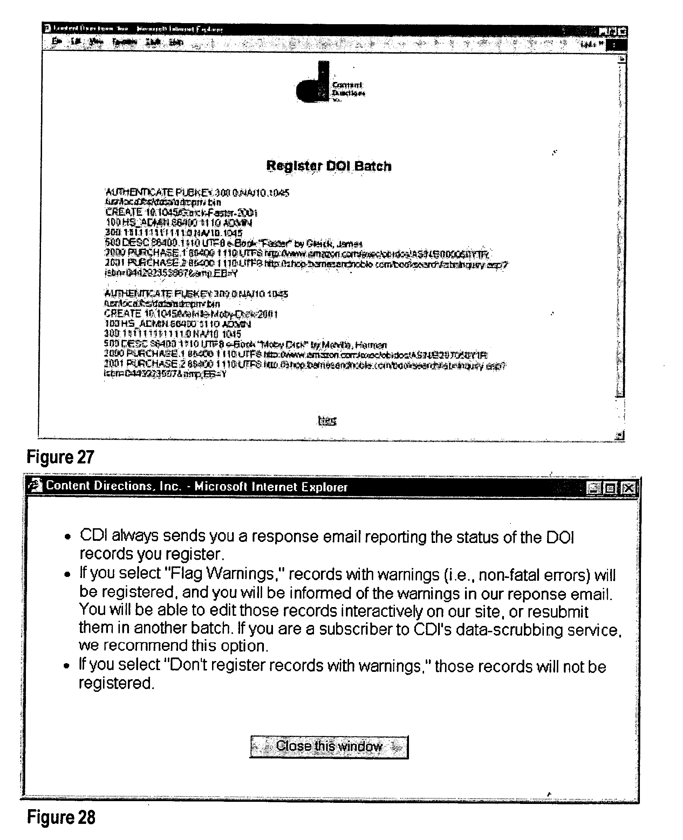

Figure 27 illustrates one non-limiting example of an IARS batch file. In one example embodiment, the contents of the batch record entries are compiled from user entries into a DOI registration tool. The user entries are then reformatted into a batch submission language grammar that may be submitted to a registration service.

### Error Reporting

Figure 28 illustrates one non-limiting example of IARS error reporting options. In one example embodiment, the help window in Figure 28 is displayed when the "What is this?" button is engaged on the error trapping level for the batch registration tool in Figure 25.

### Batch Status Reporting Options

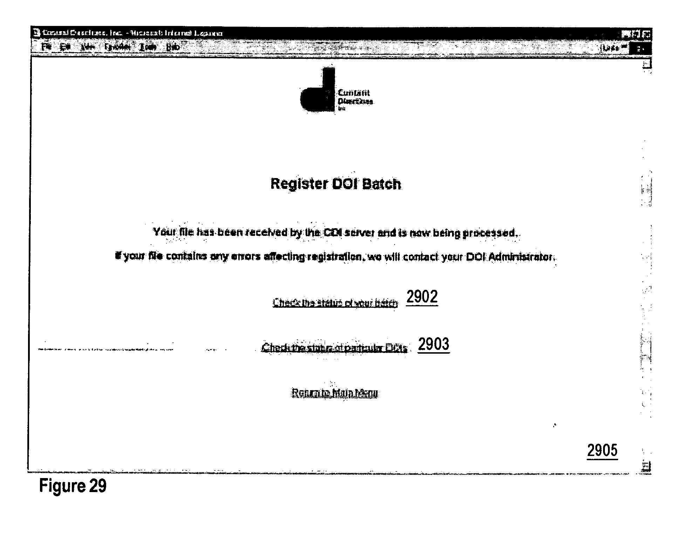

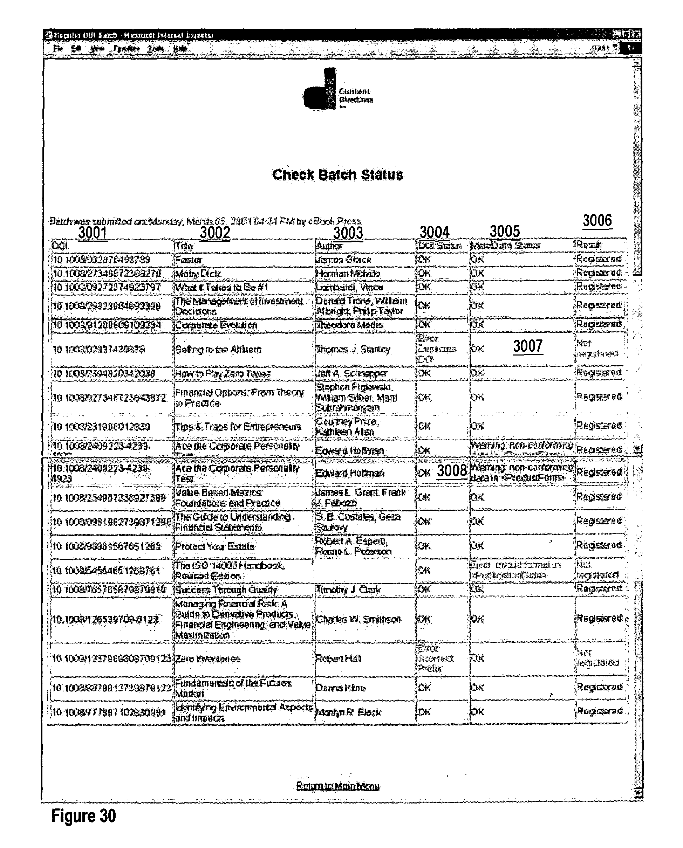

Figure 29 illustrates one non-limiting example of IARS batch status reporting options. In one example embodiment, upon submitting a batch file for registration of DOIS via a batch registration tool, the IARS will provide batch status reporting options 2902, 2903 in a web browser. The status of the entire batch may be viewed 2902, Figure 30, or alternatively, the status of a particular DOI may be viewed.

### Batch Status Report

Figure 30 illustrates one non-limiting example of IARS batch status report. In one example embodiment, upon requesting a batch status report 2902, the IARS will provide a tabular report for all DOI registration requests in a batch file. In one example embodiment, the columns list DOIs 3001, DOI-associated metadata title information from a metadata database 3002, DOI associated metadata author information from a metadata database 3003, the DOI status (i.e., if DOI registration was successful with the handle system), the metadata status (i.e., if metadata registration was successful with the metadata database), and the registration result 3006. A duplicate DOI entry (a non unique DOI) will result in a non-registered handle 3007. However, in one embodiment, non-conforming data in a "ProductForm" metadata type field will result in a warning for metadata status, yet the entry will still successfully be registered with the handle system 3008.

### DOI LOOKUP TOOL

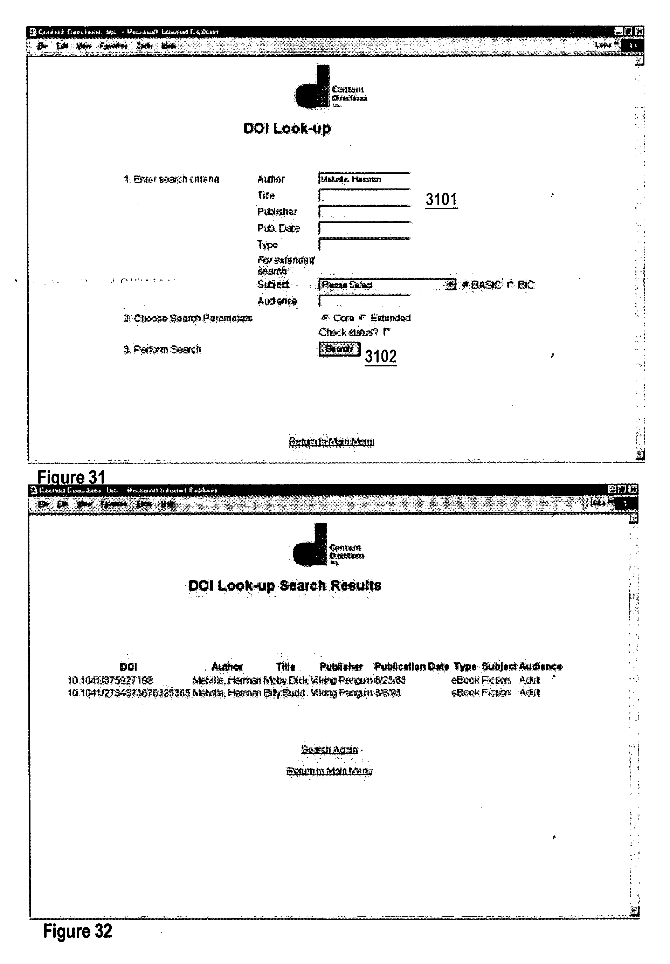

Figure 31 illustrates one non-limiting example of IARS DOI lookup tool. In one embodiment, the IARS allows users to enter search keywords or selection in fields in a web form 3101. Upon requesting a search by submitting the search keywords 3102, the IARS will query the metadata base for any matching records.

Figure 32 illustrates one non-limiting example of IARS DOI lookup search results. In one embodiment, upon submitting a query to a metadata database as in Figure 31, the IARS provides results. In one embodiment, the IARS provides search results in tabular format wherein the columns list DOIs, Author, Title, Publisher, Publication Date, Type, Subject, and Audience metadata fields.

It should be understood that the above description is only representative of illustrative embodiments. For the convenience of the reader, the above descriptions have focused on a representative sample of all possible embodiments, a sample that teaches the principles of the invention. The description has not attempted to exhaustively enumerate all possible variations. That alternate embodiments may not have been presented for a specific portion of the invention or that further undescribed alternate embodiments may be available for a portion is not to be considered a disclaimer of those alternate embodiments. It will be appreciated that many of those undescribed embodiments incorporate the same principles of the invention and others are equivalent. Thus, it is to be understood that the embodiments and variations shown and described herein are merely illustrative of the principles of this invention and that various modifications may be implemented without departing from the scope and spirit of the invention. Aspects and features of the present disclosure are set out in the following numbered clauses which contain the subject matter of the clauses of the parent application as filed.
1. A method of using a computer to access information, comprising:
   generating a unique, persistent, and universal name identifier associated for specified information;
   receiving an address for a location for the information;
   receiving metadata for the unique, persistent, and universal name identifier,
      wherein the metadata provides descriptive data regarding the unique, persistent, and universal name identifier;
   associating the unique, persistent, and universal name identifier with the metadata so that the unique, persistent, and universal name identifier and metadata can be identified by each other;
   registering the metadata in a metadata database before effecting the registration of the unique, persistent, and universal name identifier in a first phase of a two-phase registration commitment;
   generating an error signal if the metadata fails to register in the metadata database; effecting the registration of the unique, persistent, and universal name identifier with the address associated to the location of the information in a database for resolving unique, persistent, and universal name identifier s and locations of associated information, wherein the unique, persistent, and universal name identifier is unique in the database, wherein the registration of the unique, persistent, and universal name identifier is a second phase of a two-phase registration commitment and occurs after effecting the registration of the metadata in a first phase of a two-phase registration commitment; and
   generating an error signal if the unique, persistent, and universal name identifier fails to register in the database; and
   denying registration of a unique, persistent, and universal name identifier if either phase of a two-phase commitment generate an error.
2. The method of clause 1, wherein the registration of the unique, persistent, and universal name identifier resolves to entity information representing an entity.
3. The method of clause 2, wherein the entity is a person.
4. The method of clause 1, further comprising:
   determining a prefix component of a unique, persistent, and universal name identifier automatically;
   effecting the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
5. The method of clause 1, wherein metadata is denied registration in a metadata database by user request for the unique, persistent, and universal name identifier be unpublished.
6. The method of clause 1, wherein the generated errors are tagged in XML format.
7. A method of using a computer to access information, comprising:
   allocating space in a storage facility for information;
   making the location of the allocated space addressable and accessible over a communications network;
   storing the information to the allocated space;
   generating a unique, persistent, and universal name identifier associated with the information;
   effecting the registration of the unique, persistent, and universal name identifier with an address associated to a location where the information is stored in a database for resolving unique, persistent, and universal name identifier s and locations of associated information, wherein the unique, persistent, and universal name identifier is unique in the database.
8. The method of clause 7, further comprising:
   determining a prefix component of a unique, persistent, and universal name identifier automatically;
   effecting the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
9. The method of clause 7, further comprising:
   receiving metadata for the unique, persistent, and universal name identifier, wherein the metadata provides descriptive data regarding the unique, persistent, and universal name identifier; and
   associating the unique, persistent, and universal name identifier with the metadata so that the unique, persistent, and universal name identifier and metadata can be identified by each other.
10. The method of clause 9, wherein metadata is denied registration in a metadata database by user request for the unique, persistent, and universal name identifier to be unpublished.
11. The method of clause 7, further comprising:
   registering the metadata in a metadata database before effecting the registration of the unique, persistent, and universal name identifier in a first phase of a two-phase registration commitment; and
   generating an error if the metadata fails to register in the metadata database;
   registering the unique, persistent, and universal name identifier in the database in a second phase of a two-phase registration commitment after effecting the registration of the metadata in a first phase of a two-phase registration commitment; and
   generating an error if the unique, persistent, and universal name identifier fails to register in the database; and
   failing to register a unique, persistent, and universal name identifier if either phase of a two-phase commitment generate an error.
12. The method of clause 11, wherein the generated errors are tagged in XML format.
13. The method of clause 7, further comprising:
   indexing the information stored in the storage facility; and
   associating the indexed information with the unique, persistent, and universal name identifier so that the unique, persistent, and universal name identifier and indexed information can be identified by each other.
14. A method of using a computer to access information, comprising:
   determining a prefix component of a unique, persistent, and universal name identifier automatically;
   effecting the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
15. The method of clause 14, further comprising:
   receiving metadata for said prefix component of a unique, persistent, and universal name identifier, wherein the metadata provides descriptive data regarding the prefix; and
   associating the prefix with the metadata so that the prefix and metadata can be identified by each other.
16. The method of clause 14, wherein metadata is denied registration in a metadata database by user request for the unique, persistent, and universal name identifier to be unpublished.
17. A method of using a computer, comprising:
   generating, automatically, an instruction signal for a prefix component for a unique, persistent, and universal name identifier.
18. The method of clause 17, further comprising:
   generating, automatically, an instruction signal for a suffix component for a unique, persistent, and universal name identifier.
19. The method of clause 17, further comprising:
   generating, automatically, an instruction signal to allocate space for information for which the unique, persistent, and universal name identifier is being registered and making the location of the allocated space addressable and accessible over a communications network.
20. The method of clause 19, further comprising:
   generating, automatically, an instruction signal to allocate space for information that is auctioned to a plurality of storage facilities for offers.
21. The method of clause 19, further comprising:
   generating, automatically, an instruction signal to allocate space for information that is auctioned to a plurality of content distributors for offers.
22. The method of clause 19, further comprising:
   generating, automatically, an instruction signal to allocate space for information solicits offers from a plurality of storage facilities.
23. The method of clause 19, further comprising:
   generating, automatically, an instruction signal to allocate space for information solicits offers from a plurality of content distributors.
24. The method of clause 17, further comprising:
   generating, automatically, an instruction signal to register the prefix component of a unique, persistent, and universal name identifier in a database for resolving unique, persistent, and universal name identifier s and locations of associated information,
   wherein the prefix component is unique in the database, and wherein the prefix component may be used as a basis for registering subsequent unique, persistent, and universal name identifier s with unique suffixes.
25. The method of clause 17, further comprising:
   generating, automatically, an instruction signal to register the unique, persistent, and universal name identifier in a database for resolving unique, persistent, and universal name identifier s and locations of associated information, wherein the unique, persistent, and universal name identifier is unique in the database.
26. A method of using a computer, comprising:
   generating, automatically, an instruction signal to register a unique, persistent, and universal name identifier ; and
   generating, automatically, an instruction signal to allocate space for information for which the unique, persistent, and universal name identifier is being registered and making the location of the allocated space addressable and accessible over a communications network.
27. The method of clause 26, further comprising:
   generating, automatically, an instruction signal with encoded information for which the unique, persistent, and universal name identifier is being registered.
28. The method of clause 26, further comprising:
   generating, automatically, an instruction signal with an encoded location for the information for which the unique, persistent, and universal name identifier is being registered.
29. The method of clause 26, further comprising:
   generating, automatically, an instruction signal for a prefix component for a unique, persistent, and universal name identifier.
30. A method of using a computer to establish an association of desired information and a unique, persistent, and universal name identifier, comprising:
   specifying desired information;
   specifying a prefix for a unique, persistent, and universal name identifier ;
   specifying a suffix for a unique, persistent, and universal name identifier ;
   specifying a location for the desired information;
   effecting the submission of any specified desired information, prefix, suffix, and location to a unique, persistent, and universal name identifier database for registration.
31. The method of clause 30, wherein the specification of desired information is through a selection tool of a content authoring application providing access to information in the content authoring application through an application programming interface disposed in communication with an interaction interface.
32. The method of clause 30, wherein the specification of desired information is through a file selection tool.
33. The method of clause 30, wherein the specification of a prefix invokes a publisher registration tool.
34. The method of clause 33, wherein a publisher registration tool provides fields for contact and billing information to be entered by a user.
35. The method of clause 34, wherein the publisher provided fields for contact and billing information to be entered by a user are storable.
36. The method of clause 30, wherein the specification of a prefix obtains stored publisher contact and billing information.
37. The method of clause 36, wherein the stored publisher contact and billing information is to be stored in a cookie.
38. The method of clause 36, wherein the stored publisher contact and billing information is to be stored in a preference file.
39. The method of clause 36, wherein the stored publisher contact and billing information is to be stored in a database.
40. The method of clause 30, further comprising:
   specifying metadata.
41. The method of clause 40, wherein the specification to effect submission is further configured to submit metadata to a metadata database to be associated with respective data submitted to the unique, persistent, and universal name identifier database.
42. The method of clause 30, wherein the specification of a prefix sets a flag for automatically generating a prefix.
43. The method of clause 30, wherein the specification of a suffix sets a flag for automatically generating a suffix.
44. The method of clause 30, wherein the specification of a location is through a file selection tool.
45. The method of clause 30, wherein the specification of a location is through a URL text field.
46. The method of clause 30, wherein the specification to effect submission of data is through a button.
47. The method of clause 30, wherein the specification to effect submission of data effects the registration of a unique, persistent, and universal name identifier for a document.
48. The method of clause 30, wherein the specification to effect submission of data effects the registration of a unique, persistent, and universal name identifier for a selection of information.
49. The method of clause 30, wherein the effectuation of the registration of a unique, persistent, and universal name identifier for a selection of information is automatic without further user interaction.
50. The method of clause 30, wherein the specification to effect submission of data is through a menu.
51. The method of clause 30, wherein the specification to effect submission of data imbeds identifying tags within the context of a selection of information.
52. The method of clause 30, wherein the specification to effect submission of data imbeds identifying tags within a document.
53. The method of clause 30, wherein the specification to effect submission of data stores a provisional unique, persistent, and universal name identifier.
54. The method of clause 53, wherein the provisional unique, persistent, and universal name identifier is stored in a file.
55. The method of clause 53, wherein the provisional unique, persistent, and universal name identifier is stored in a batch file.
56. The method of clause 53, wherein the provisional unique, persistent, and universal name identifier is stored in a database.
57. The method of clause 30, wherein the mechanism to effect submission of data stores a metadata for a provisional unique, persistent, and universal name identifier.
58. The method of clause 57, wherein the stored metadata includes document information.
59. The method of clause 58, wherein the document information includes the author of the document.
60. The method of clause 58, wherein the document information includes the creation date of the document.
61. The method of clause 58, wherein the document information includes the modification date of the document.
62. The method of clause 58, wherein the document information includes corporation owning the document.
63. The method of clause 58, wherein the document information includes automatic document generated values.
64. The method of clause 63, wherein the automatic document generated values is include index information.
65. The method of clause 63, wherein the automatic document generated values is table of contents information.
66. The method of clause 63, wherein the automatic document generated values is glossary information.
67. A system for information access, comprising:
   means to generate a unique, persistent, and universal name identifier associated for specified information;
   means to receive an address for a location for the information;
   means to receive metadata for the unique, persistent, and universal name identifier , wherein the metadata provides descriptive data regarding the unique, persistent, and universal name identifier;
   means to associate the unique, persistent, and universal name identifier with the metadata so that the unique, persistent, and universal name identifier and metadata can be identified by each other;
   means to register the metadata in a metadata database before effecting the registration of the unique, persistent, and universal name identifier in a first phase of a two-phase registration commitment;
   means to generate an error signal if the metadata fails to register in the metadata database;
   means to effect the registration of the unique, persistent, and universal name identifier with the address associated to the location of the information in a database for resolving unique, persistent, and universal name identifier s and locations of associated information, wherein the unique, persistent, and universal name identifier is unique in the database, wherein the registration of the unique, persistent, and universal name identifier is a second phase of a two-phase registration commitment and occurs after effecting the registration of the metadata in a first phase of a two-phase registration commitment; and
   means to generate an error signal if the unique, persistent, and universal name identifier fails to register in the database; and
   means to deny registration of a unique, persistent, and universal name identifier if either phase of a two-phase commitment generate an error.
68. The system of clause 67, wherein the registration of the unique, persistent, and universal name identifier resolves to entity information representing an entity.
69. The system of clause 68, wherein the entity is a person.
70. The system of clause 67, further comprising:
   means to determine a prefix component of a unique, persistent, and universal name identifier automatically;
   means to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
71. The system of clause 67, wherein metadata is denied registration in a metadata database by user request for the unique, persistent, and universal name identifier be unpublished.
72. The system of clause 67, wherein the generated errors are tagged in XML format.
73. A system for information access, comprising:
   means to allocate space in a storage facility for information;
   means to make the location of the allocated space addressable and accessible over a communications network;
   means to store the information to the allocated space;
   means to generate a unique, persistent, and universal name identifier associated with the information;
   means to effect the registration of the unique, persistent, and universal name identifier with an address associated to a location where the information is stored in a database for resolving unique, persistent, and universal name identifier s and locations of associated information, wherein the unique, persistent, and universal name identifier is unique in the database.
74. The system of clause 73, further comprising:
   means to determine a prefix component of a unique, persistent, and universal name identifier automatically;
   means to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
75. The system of clause 73, further comprising:
   means to receive metadata for the unique, persistent, and universal name identifier , wherein the metadata provides descriptive data regarding the unique, persistent, and universal name identifier ; and
   means to associate the unique, persistent, and universal name identifier with the metadata so that the unique, persistent, and universal name identifier and metadata can be identified by each other.
76. The system of clause 75, wherein metadata is denied registration in a metadata database by user request for the unique, persistent, and universal name identifier to be unpublished.
77. The system of clause 73, further comprising:
   means to register the metadata in a metadata database before effecting the registration of the unique, persistent, and universal name identifier in a first phase of a two-phase registration commitment; and
   means to generate an error if the metadata fails to register in the metadata database;
   means to register the unique, persistent, and universal name identifier in the database in a second phase of a two-phase registration commitment after effecting the registration of the metadata in a first phase of a two-phase registration commitment; and
   means to generate an error if the unique, persistent, and universal name identifier fails to register in the database; and
   means to fail to register a unique, persistent, and universal name identifier if either phase of a two-phase commitment generate an error.
78. The system of clause 77, wherein the generated errors are tagged in XML format.
79. The system of clause 73, further comprising:
   means to index the information stored in the storage facility; and
   means to associate the indexed information with the unique, persistent, and universal name identifier so that the unique, persistent, and universal name identifier and indexed information can be identified by each other.
80. A system for information access, comprising:
   means to determine a prefix component of a unique, persistent, and universal name identifier automatically;
   means to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
81. The system of clause 80, further comprising:
   means to receive metadata for said prefix component of a unique, persistent, and universal name identifier , wherein the metadata provides descriptive data regarding the prefix; and
   means to associate the prefix with the metadata so that the prefix and metadata can be identified by each other.
82. The system of clause 80, wherein metadata is denied registration in a metadata database by user request for the unique, persistent, and universal name identifier to be unpublished.
83. A system for using a computer, comprising:
   means to generate, automatically, an instruction signal for a prefix component for a unique, persistent, and universal name identifier.
84. The system of clause 83, further comprising:
   means to generate, automatically, an instruction signal for a suffix component for a unique, persistent, and universal name identifier.
85. The system of clause 83, further comprising:
   means to generate, automatically, an instruction signal to allocate space for information for which the unique, persistent, and universal name identifier is being registered and making the location of the allocated space addressable and accessible over a communications network.
86. The system of clause 85, further comprising:
   means to generate, automatically, an instruction signal to allocate space for information that is auctioned to a plurality of storage facilities for offers.
87. The system of clause 85, further comprising:
   means to generate, automatically, an instruction signal to allocate space for information that is auctioned to a plurality of content distributors for offers.
88. The system of clause 85, further comprising:
   means to generate, automatically, an instruction signal to allocate space for information solicits offers from a plurality of storage facilities.
89. The system of clause 85, further comprising:
   means to generate, automatically, an instruction signal to allocate space for information solicits offers from a plurality of content distributors.
90. The system of clause 83, further comprising:
   means to generate, automatically, an instruction signal to register the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
91. The system of clause 83, further comprising:
   means to generate, automatically, an instruction signal to register the unique, persistent, and universal name identifier in a database for resolving unique, persistent, and universal name identifier s and locations of associated information, wherein the unique, persistent, and universal name identifier is unique in the database.
92. A system for using a computer, comprising:
   means to generate, automatically, an instruction signal to register a unique, persistent, and universal name identifier; and
   generate, automatically, an instruction signal to allocate space for information for which the unique, persistent, and universal name identifier is being registered and making the location of the allocated space addressable and accessible over a communications network.
93. The system of clause 92, further comprising:
   generate, automatically, an instruction signal with encoded information for which the unique, persistent, and universal name identifier is being registered.
94. The system of clause 92, further comprising:
   generate, automatically, an instruction signal with an encoded location for the information for which the unique, persistent, and universal name identifier is being registered.
95. The system of clause 92, further comprising:
   generate, automatically, an instruction signal for a prefix component for a unique, persistent, and universal name identifier.
96. A system to establish an association of desired information and a unique, persistent, and universal name identifier, comprising:
   means to specify desired information;
   means to specify a prefix for a unique, persistent, and universal name identifier ;
   means to specify a suffix for a unique, persistent, and universal name identifier ;
   means to specify a location for the desired information;
   means to effect the submission of any specified desired information, prefix, suffix, and location to a unique, persistent, and universal name identifier database for registration.
97. The system of clause 96, wherein the specification of desired information is through a selection tool of a content authoring application providing access to information in the content authoring application through an application programming interface disposed in communication with an interaction interface.
98. The system of clause 96, wherein the specification of desired information is through a file selection tool.
99. The system of clause 96, wherein the specification of a prefix invokes a publisher registration tool.
100. The system of clause 99, wherein a publisher registration tool provides fields for contact and billing information to be entered by a user.
101. The system of clause 100, wherein the publisher provided fields for contact and billing information to be entered by a user are storable.
102. The system of clause 96, wherein the specification of a prefix obtains stored publisher contact and billing information.
103. The system of clause 102, wherein the stored publisher contact and billing information is to be stored in a cookie.
104. The system of clause 102, wherein the stored publisher contact and billing information is to be stored in a preference file.
105. The system of clause 102, wherein the stored publisher contact and billing information is to be stored in a database.
106. The system of clause 96, further comprising:
   means to specify metadata.
107. The system of clause 106, wherein the specification to effect submission is further configured to submit metadata to a metadata database to be associated with respective data submitted to the unique, persistent, and universal name identifier database.
108. The system of clause 96, wherein the specification of a prefix sets a flag for automatically generating a prefix.
109. The system of clause 96, wherein the specification of a suffix sets a flag for automatically generating a suffix.
110. The system of clause 96, wherein the specification of a location is through a file selection tool.
111. The system of clause 96, wherein the specification of a location is through a URL text field.
112. The system of clause 96, wherein the specification to effect submission of data is through a button.
113. The system of clause 96, wherein the specification to effect submission of data effects the registration of a unique, persistent, and universal name identifier for a document.
114. The system of clause 96, wherein the specification to effect submission of data effects the registration of a unique, persistent, and universal name identifier for a selection of information.
115. The system of clause 96, wherein the effectuation of the registration of a unique, persistent, and universal name identifier for a selection of information is automatic without further user interaction.
116. The system of clause 96, wherein the specification to effect submission of data is through a menu.
117. The system of clause 96, wherein the specification to effect submission of data imbeds identifying tags within the context of a selection of information.
118. The system of clause 96, wherein the specification to effect submission of data imbeds identifying tags within a document.
119. The system of clause 96, wherein the specification to effect submission of data stores a provisional unique, persistent, and universal name identifier.
120. The system of clause 119, wherein the provisional unique, persistent, and universal name identifier is stored in a file.
121. The system of clause 119, wherein the provisional unique, persistent, and universal name identifier is stored in a batch file.
122. The system of clause 119, wherein the provisional unique, persistent, and universal name identifier is stored in a database.
123. The system of clause 96, wherein the mechanism to effect submission of data stores a metadata for a provisional unique, persistent, and universal name identifier.
124. The system of clause 123, wherein the stored metadata includes document information.
125. The system of clause 124, wherein the document information includes the author of the document.
126. The system of clause 124, wherein the document information includes the creation date of the document.
127. The system of clause 124, wherein the document information includes the modification date of the document.
128. The system of clause 124, wherein the document information includes corporation owning the document.
129. The system of clause 124, wherein the document information includes automatic document generated values.
130. The system of clause 129, wherein the automatic document generated values is include index information.
131. The system of clause 129, wherein the automatic document generated values is table of contents information.
132. The system of clause 129, wherein the automatic document generated values is glossary information.
133. A program stored on a medium readable by a processor, the program for information access, comprising:
   a module to generate a unique, persistent, and universal name identifier associated for specified information;
   a module to receive an address for a location for the information;
   a module to receive metadata for the unique, persistent, and universal name identifier , wherein the metadata provides descriptive data regarding the unique, persistent, and universal name identifier ;
   a module to associate the unique, persistent, and universal name identifier with the metadata so that the unique, persistent, and universal name identifier and metadata can be identified by each other;
   a module to register the metadata in a metadata database before effecting the registration of the unique, persistent, and universal name identifier in a first phase of a two-phase registration commitment;
   a module to generate an error signal if the metadata fails to register in the metadata database;
   a module to effect the registration of the unique, persistent, and universal name identifier with the address associated to the location of the information in a database for resolving unique, persistent, and universal name identifier s and locations of associated information, wherein the unique, persistent, and universal name identifier is unique in the database, wherein the registration of the unique, persistent, and universal name identifier is a second phase of a two-phase registration commitment and occurs after effecting the registration of the metadata in a first phase of a two-phase registration commitment; and
   a module to generate an error signal if the unique, persistent, and universal name identifier fails to register in the database; and
   a module to deny registration of a unique, persistent, and universal name identifier if either phase of a two-phase commitment generate an error.
134. The medium of clause 133, wherein the registration of the unique, persistent, and universal name identifier resolves to entity information representing an entity.
135. The medium of clause 134, wherein the entity is a person.
136. The medium of clause 133, further comprising:
   a module to determine a prefix component of a unique, persistent, and universal name identifier automatically;
   a module to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
137. The medium of clause 133, wherein metadata is denied registration in a metadata database by user request for the unique, persistent, and universal name identifier be unpublished.
138. The medium of clause 133, wherein the generated errors are tagged in XML format.
139. A program stored on a medium readable by a processor, the program for information access, comprising:
   a module to allocate space in a storage facility for information;
   a module to make the location of the allocated space addressable and accessible over a communications network;
   a module to store the information to the allocated space;
   a module to generate a unique, persistent, and universal name identifier associated with the information;
   a module to effect the registration of the unique, persistent, and universal name identifier with an address associated to a location where the information is stored in a database for resolving unique, persistent, and universal name identifier s and locations of associated information, wherein the unique, persistent, and universal name identifier is unique in the database.
140. The medium of clause 139, further comprising:
   a module to determine a prefix component of a unique, persistent, and universal name identifier automatically;
   a module to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
141. The medium of clause 139, further comprising:
   a module to receive metadata for the unique, persistent, and universal name identifier , wherein the metadata provides descriptive data regarding the unique, persistent, and universal name identifier ; and
   a module to associate the unique, persistent, and universal name identifier with the metadata so that the unique, persistent, and universal name identifier and metadata can be identified by each other.
142. The medium of clause 141, wherein metadata is denied registration in a metadata database by user request for the unique, persistent, and universal name identifier to be unpublished.
143. The medium of clause 139, further comprising:
   a module to register the metadata in a metadata database before effecting the registration of the unique, persistent, and universal name identifier in a first phase of a two-phase registration commitment; and
   a module to generate an error if the metadata fails to register in the metadata database;
   a module to register the unique, persistent, and universal name identifier in the database in a second phase of a two-phase registration commitment after effecting the registration of the metadata in a first phase of a two-phase registration commitment; and
   a module to generate an error if the unique, persistent, and universal name identifier fails to register in the database; and
   a module to fail to register a unique, persistent, and universal name identifier if either phase of a two-phase commitment generate an error.
144. The medium of clause 143, wherein the generated errors are tagged in XML format.
145. The medium of clause 139, further comprising:
   a module to index the information stored in the storage facility; and
   a module to associate the indexed information with the unique, persistent, and universal name identifier so that the unique, persistent, and universal name identifier and indexed information can be identified by each other.
146. A program stored on a medium readable by a processor, the program for information access, comprising:
   a module to determine a prefix component of a unique, persistent, and universal name identifier automatically;
   a module to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
147. The medium of clause 146, further comprising:
   a module to receive metadata for said prefix component of a unique, persistent, and universal name identifier, wherein the metadata provides descriptive data regarding the prefix; and
   a module to associate the prefix with the metadata so that the prefix and metadata can be identified by each other.
148. The medium of clause 146, wherein metadata is denied registration in a metadata database by user request for the unique, persistent, and universal name identifier to be unpublished.
149. A computer readable medium, comprising:
   an instruction signal to automatically generate a prefix component for a unique, persistent, and universal name identifier.
150. The medium of clause 149, further comprising an instruction signal to automatically generate a suffix component for a unique, persistent, and universal name identifier.
151. The medium of clause 149, further comprising an instruction signal to automatically allocate space for information for which the unique, persistent, and universal name identifier is being registered and making the location of the allocated space addressable and accessible over a communications network.
152. The medium of clause 151, further comprising an instruction signal to automatically allocate space for information is auctioned to a plurality of storage facilities for offers.
153. The medium of clause 151, further comprising an instruction signal to automatically allocate space for information is auctioned to a plurality of content distributors for offers.
154. The medium of clause 151, further comprising an instruction signal to automatically allocate space for information solicits offers from a plurality of storage facilities.
155. The medium of clause 151, further comprising an instruction signal to automatically allocate space for information solicits offers from a plurality of content distributors.
156. The medium of clause 149, further comprising an instruction signal to automatically register the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
157. The medium of clause 149, further comprising an instruction signal to automatically register the unique, persistent, and universal name identifier in a database for resolving unique, persistent, and universal name identifier s and locations of associated information, wherein the unique, persistent, and universal name identifier is unique in the database.
158. A computer readable medium, comprising:
   an instruction signal to automatically register a unique, persistent, and universal name identifier; and
   an instruction signal to automatically allocate space for information for which the unique, persistent, and universal name identifier is being registered and making the location of the allocated space addressable and accessible over a communications network.
159. The medium of clause 158, further comprising an instruction signal with encoded information for which the unique, persistent, and universal name identifier is being registered.
160. The medium of clause 158, further comprising an instruction signal with an encoded location for the information for which the unique, persistent, and universal name identifier is being registered.
161. The medium of clause 158, further comprising an instruction signal to automatically generate a prefix component for a unique, persistent, and universal name identifier .
162. A program stored on a medium readable by a processor, the program to establish an association of desired information and a unique, persistent, and universal name identifier, comprising:
   a module to specify desired information;
   a module to specify a prefix for a unique, persistent, and universal name identifier
   a module to specify a suffix for a unique, persistent, and universal name identifier
   a module to specify a location for the desired information;
   a module to effect the submission of any specified desired information, prefix, suffix, and location to a unique, persistent, and universal name identifier database for registration.
163. The medium of clause 162, wherein the specification of desired information is through a selection tool of a content authoring application providing access to information in the content authoring application through an application programming interface disposed in communication with an interaction interface.
164. The medium of clause 162, wherein the specification of desired information is through a file selection tool.
165. The medium of clause 162, wherein the specification of a prefix invokes a publisher registration tool.
166. The medium of clause 165, wherein a publisher registration tool provides fields for contact and billing information to be entered by a user.
167. The medium of clause 166, wherein the publisher provided fields for contact and billing information to be entered by a user are storable.
168. The medium of clause 162, wherein the specification of a prefix obtains stored publisher contact and billing information.
169. The medium of clause 168, wherein the stored publisher contact and billing information is to be stored in a cookie.
170. The medium of clause 168, wherein the stored publisher contact and billing information is to be stored in a preference file.
171. The medium of clause 168, wherein the stored publisher contact and billing information is to be stored in a database.
172. The medium of clause 162, further comprising:
   a module to specify metadata.
173. The medium of clause 172, wherein the specification to effect submission is further configured to submit metadata to a metadata database to be associated with respective data submitted to the unique, persistent, and universal name identifier database.
174. The medium of clause 162, wherein the specification of a prefix sets a flag for automatically generating a prefix.
175. The medium of clause 162, wherein the specification of a suffix sets a flag for automatically generating a suffix.
176. The medium of clause 162, wherein the specification of a location is through a file selection tool.
177. The medium of clause 162, wherein the specification of a location is through a URL text field.
178. The medium of clause 162, wherein the specification to effect submission of data is through a button.
179. The medium of clause 162, wherein the specification to effect submission of data effects the registration of a unique, persistent, and universal name identifier for a document.
180. The medium of clause 162, wherein the specification to effect submission of data effects the registration of a unique, persistent, and universal name identifier for a selection of information.
181. The medium of clause 162, wherein the effectuation of the registration of a unique, persistent, and universal name identifier for a selection of information is automatic without further user interaction.
182. The medium of clause 162, wherein the specification to effect submission of data is through a menu.
183. The medium of clause 162, wherein the specification to effect submission of data imbeds identifying tags within the context of a selection of information.
184. The medium of clause 162, wherein the specification to effect submission of data imbeds identifying tags within a document.
185. The medium of clause 162, wherein the specification to effect submission of data stores a provisional unique, persistent, and universal name identifier .
186. The medium of clause 185, wherein the provisional unique, persistent, and universal name identifier is stored in a file.
187. The medium of clause 185, wherein the provisional unique, persistent, and universal name identifier is stored in a batch file.
188. The medium of clause 185, wherein the provisional unique, persistent, and universal name identifier is stored in a database.
189. The medium of clause 162, wherein the mechanism to effect submission of data stores a metadata for a provisional unique, persistent, and universal name identifier.
190. The medium of clause 189, wherein the stored metadata includes document information.
191. The medium of clause 190, wherein the document information includes the author of the document.
192. The medium of clause 190, wherein the document information includes the creation date of the document.
193. The medium of clause 190, wherein the document information includes the modification date of the document.
194. The medium of clause 190, wherein the document information includes corporation owning the document.
195. The medium of clause 190, wherein the document information includes automatic document generated values.
196. The medium of clause 195, wherein the automatic document generated values is include index information.
197. The medium of clause 195, wherein the automatic document generated values is table of contents information.
198. The medium of clause 195, wherein the automatic document generated values is glossary information.
199. An apparatus, comprising:
   a processor;
   a memory, communicatively connected to the processor;
   a program, stored in the memory, including,
      a module to generate a unique, persistent, and universal name identifier associated for specified information;
      a module to receive an address for a location for the information;
      a module to receive metadata for the unique, persistent, and universal name identifier, wherein the metadata provides descriptive data regarding the unique, persistent, and universal name identifier ;
      a module to associate the unique, persistent, and universal name identifier with the metadata so that the unique, persistent, and universal name identifier and metadata can be identified by each other;
      a module to register the metadata in a metadata database before effecting the registration of the unique, persistent, and universal name identifier in a first phase of a two-phase registration commitment;
      a module to generate an error signal if the metadata fails to register in the metadata database;
      a module to effect the registration of the unique, persistent, and universal name identifier with the address associated to the location of the information in a database for resolving unique, persistent, and universal name identifier s and locations of associated information, wherein the unique, persistent, and universal name identifier is unique in the database, wherein the registration of the unique, persistent, and universal name identifier is a second phase of a two-phase registration commitment and occurs after effecting the registration of the metadata in a first phase of a two-phase registration commitment; and
      a module to generate an error signal if the unique, persistent, and universal name identifier fails to register in the database; and
      a module to deny registration of a unique, persistent, and universal name identifier if either phase of a two-phase commitment generate an error.
200. The apparatus of clause 199, wherein the registration of the unique, persistent, and universal name identifier resolves to entity information representing an entity.
201. The apparatus of clause 200, wherein the entity is a person.
202. The apparatus of clause 199, further comprising:
   a module to determine a prefix component of a unique, persistent, and universal name identifier automatically;
   a module to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
203. The apparatus of clause 199, wherein metadata is denied registration in a metadata database by user request for the unique, persistent, and universal name identifier be unpublished.
204. The apparatus of clause 199, wherein the generated errors are tagged in XML format.
205. An apparatus, comprising:
   a processor;
   a memory, communicatively connected to the processor;
   a program, stored in the memory, including,
      a module to allocate space in a storage facility for information;
      a module to make the location of the allocated space addressable and accessible over a communications network;
      a module to store the information to the allocated space;
      a module to generate a unique, persistent, and universal name identifier associated with the information;
      a module to effect the registration of the unique, persistent, and universal name identifier with an address associated to a location where the information is stored in a database for resolving unique, persistent, and universal name identifier s and locations of associated information, wherein the unique, persistent, and universal name identifier is unique in the database.
206. The apparatus of clause 205, further comprising:
   a module to determine a prefix component of a unique, persistent, and universal name identifier automatically;
   a module to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
207. The apparatus of clause 205, further comprising:
   a module to receive metadata for the unique, persistent, and universal name identifier, wherein the metadata provides descriptive data regarding the unique, persistent, and universal name identifier ; and
   a module to associate the unique, persistent, and universal name identifier with the metadata so that the unique, persistent, and universal name identifier and metadata can be identified by each other.
208. The apparatus of clause 207, wherein metadata is denied registration in a metadata database by user request for the unique, persistent, and universal name identifier to be unpublished.
209. The apparatus of clause 205, further comprising:
   a module to register the metadata in a metadata database before effecting the registration of the unique, persistent, and universal name identifier in a first phase of a two-phase registration commitment; and
   a module to generate an error if the metadata fails to register in the metadata database;
   a module to register the unique, persistent, and universal name identifier in the database in a second phase of a two-phase registration commitment after effecting the registration of the metadata in a first phase of a two-phase registration commitment; and
   a module to generate an error if the unique, persistent, and universal name identifier fails to register in the database; and
   a module to fail to register a unique, persistent, and universal name identifier if either phase of a two-phase commitment generate an error.
210. The apparatus of clause 209, wherein the generated errors are tagged in XML format.
211. The apparatus of clause 205, further comprising:
   a module to index the information stored in the storage facility; and
   a module to associate the indexed information with the unique, persistent, and universal name identifier so that the unique, persistent, and universal name identifier and indexed information can be identified by each other.
212. An apparatus, comprising:
   a processor;
   a memory, communicatively connected to the processor;
   a program, stored in the memory, including,
      a module to determine a prefix component of a unique, persistent, and universal name identifier automatically;
      a module to effect the registration of the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
213. The apparatus of clause 212, further comprising:
   a module to receive metadata for said prefix component of a unique, persistent, and universal name identifier , wherein the metadata provides descriptive data regarding the prefix; and
   a module to associate the prefix with the metadata so that the prefix and metadata can be identified by each other.
214. The apparatus of clause 212, wherein metadata is denied registration in a metadata database by user request for the unique, persistent, and universal name identifier to be unpublished.
215. An apparatus, comprising:
   a processor;
   a memory, communicatively connected to the processor;
   a program, stored in the memory, including,
      a module to generate, automatically, an instruction signal for a prefix component for a unique, persistent, and universal name identifier .
216. The apparatus of clause 215, further comprising:
   a module to generate, automatically, an instruction signal for a suffix component for a unique, persistent, and universal name identifier .
217. The apparatus of clause 215, further comprising:
   a module to generate, automatically, an instruction signal to allocate space for information for which the unique, persistent, and universal name identifier is being registered and making the location of the allocated space addressable and accessible over a communications network.
218. The apparatus of clause 217, further comprising:
   a module to generate, automatically, an instruction signal to allocate space for information that is auctioned to a plurality of storage facilities for offers.
219. The apparatus of clause 217, further comprising:
   a module to generate, automatically, an instruction signal to allocate space for information that is auctioned to a plurality of content distributors for offers.
220. The apparatus of clause 217, further comprising:
   a module to generate, automatically, an instruction signal to allocate space for information solicits offers from a plurality of storage facilities.
221. The apparatus of clause 217, further comprising:
   a module to generate, automatically, an instruction signal to allocate space for information solicits offers from a plurality of content distributors.
222. The apparatus of clause 215, further comprising:
   a module to generate, automatically, an instruction signal to register the prefix component of a unique, persistent, and universal name identifier in a database for resolving unique, persistent, and universal name identifier s and locations of associated information, wherein the prefix component is unique in the database, and wherein the prefix component may be used as a basis for registering subsequent unique, persistent, and universal name identifier s with unique suffixes.
223. The apparatus of clause 215, further comprising:
   a module to generate, automatically, an instruction signal to register the unique, persistent, and universal name identifier in a database for resolving unique, persistent, and universal name identifier s and locations of associated information, wherein the unique, persistent, and universal name identifier is unique in the database.
224. An apparatus, comprising:
   a processor;
   a memory, communicatively connected to the processor;
   a program, stored in the memory, including,
      a module to generate, automatically, an instruction signal to register a unique, persistent, and universal name identifier ; and
      generate, automatically, an instruction signal to allocate space for information for which the unique, persistent, and universal name identifier is being registered and making the location of the allocated space addressable and accessible over a communications network.
225. The apparatus of clause 224, further comprising:
   generate, automatically, an instruction signal with encoded information for which the unique, persistent, and universal name identifier is being registered.
226. The apparatus of clause 224, further comprising:
   generate, automatically, an instruction signal with an encoded location for the information for which the unique, persistent, and universal name identifier is being registered.
227. The apparatus of clause 224, further comprising:
   generate, automatically, an instruction signal for a prefix component for a unique, persistent, and universal name identifier .
228. An apparatus, comprising:
   a processor;
   a memory, communicatively connected to the processor;
   a program, stored in the memory, including,
      a module to specify desired information;
      a module to specify a prefix for a unique, persistent, and universal name identifier;
      a module to specify a suffix for a unique, persistent, and universal name identifier ;
      a module to specify a location for the desired information;
      a module to effect the submission of any specified desired information, prefix, suffix, and location to a unique, persistent, and universal name identifier database for registration.
229. The apparatus of clause 228, wherein the specification of desired information is through a selection tool of a content authoring application providing access to information in the content authoring application through an application programming interface disposed in communication with an interaction interface.
230. The apparatus of clause 228, wherein the specification of desired information is through a file selection tool.
231. The apparatus of clause 228, wherein the specification of a prefix invokes a publisher registration tool.
232. The apparatus of clause 231, wherein a publisher registration tool provides fields for contact and billing information to be entered by a user.
233. The apparatus of clause 232, wherein the publisher provided fields for contact and billing information to be entered by a user are storable.
234. The apparatus of clause 228, wherein the specification of a prefix obtains stored publisher contact and billing information.
235. The apparatus of clause 234, wherein the stored publisher contact and billing information is to be stored in a cookie.
236. The apparatus of clause 234, wherein the stored publisher contact and billing information is to be stored in a preference file.
237. The apparatus of clause 234, wherein the stored publisher contact and billing information is to be stored in a database.
238. The apparatus of clause 228, further comprising:
   a module to specify metadata.
239. The apparatus of clause 238, wherein the specification to effect submission is further configured to submit metadata to a metadata database to be associated with respective data submitted to the unique, persistent, and universal name identifier database.
240. The apparatus of clause 228, wherein the specification of a prefix sets a flag for automatically generating a prefix.
241. The apparatus of clause 228, wherein the specification of a suffix sets a flag for automatically generating a suffix.
242. The apparatus of clause 228, wherein the specification of a location is through a file selection tool.
243. The apparatus of clause 228, wherein the specification of a location is through a URL text field.
244. The apparatus of clause 228, wherein the specification to effect submission of data is through a button.
245. The apparatus of clause 228, wherein the specification to effect submission of data effects the registration of a unique, persistent, and universal name identifier for a document.
246. The apparatus of clause 228, wherein the specification to effect submission of data effects the registration of a unique, persistent, and universal name identifier for a selection of information.
247. The apparatus of clause 228, wherein the effectuation of the registration of a unique, persistent, and universal name identifier for a selection of information is automatic without further user interaction.
248. The apparatus of clause 228, wherein the specification to effect submission of data is through a menu.
249. The apparatus of clause 228, wherein the specification to effect submission of data imbeds identifying tags within the context of a selection of information.
250. The apparatus of clause 228, wherein the specification to effect submission of data imbeds identifying tags within a document.
251. The apparatus of clause 228, wherein the specification to effect submission of data stores a provisional unique, persistent, and universal name identifier .
252. The apparatus of clause 251, wherein the provisional unique, persistent, and universal name identifier is stored in a file.
253. The apparatus of clause 251, wherein the provisional unique, persistent, and universal name identifier is stored in a batch file.
254. The apparatus of clause 125185, wherein the provisional unique, persistent, and universal name identifier is stored in a database.
255. The apparatus of clause 228, wherein the mechanism to effect submission of data stores a metadata for a provisional unique, persistent, and universal name identifier.
256. The apparatus of clause 255, wherein the stored metadata includes document information.
257. The apparatus of clause 256, wherein the document information includes the author of the document.
258. The apparatus of clause 256, wherein the document information includes the creation date of the document.
259. The apparatus of clause 256, wherein the document information includes the modification date of the document.
260. The apparatus of clause 256, wherein the document information includes corporation owning the document.
261. The apparatus of clause 256, wherein the document information includes automatic document generated values.
262. The apparatus of clause 261, wherein the automatic document generated values is include index information.
263. The apparatus of clause 261, wherein the automatic document generated values is table of contents information.
264. The apparatus of clause 261, wherein the automatic document generated values is glossary information.
265. In memory, an interaction interface invocable by an application program responsive to user selections to invoke application module commands, comprising:
   a selection interface mechanism to specify desired information;
   an interaction interface mechanism to specify a prefix for a unique, persistent, and universal name identifier;
   an interaction interface mechanism to specify a suffix for a unique, persistent, and universal name identifier;
   an interaction interface mechanism to specify a location for the desired information;
   an interaction interface mechanism to effect the submission of any specified desired information, prefix, suffix, and location to a unique, persistent, and universal name identifier database for registration; and
   a display area to display any of the mechanisms.
266. The interface of clause 265, wherein the selection mechanism to specify desired information is a selection tool of a content authoring application providing access to information in the content authoring application through an application programming interface disposed in communication with the interaction interface.
267. The interface of clause 265, wherein the selection mechanism to specify desired information is a file selection tool.
268. The interface of clause 265, wherein the mechanism to specify a prefix invokes a publisher registration tool.
269. The interface of clause 268, wherein the publisher registration tool provides fields for contact and billing information to be entered by a user.
270. The interface of clause 269, wherein the publisher provided fields for contact and billing information to be entered by a user are storable.
271. The interface of clause 265, wherein the mechanism to specify a prefix obtains stored publisher contact and billing information.
272. The interface of clause 271, wherein the stored publisher contact and billing information is to be stored in a cookie.
273. The interface of clause 271, wherein the stored publisher contact and billing information is to be stored in a preference file.
274. The interface of clause 271, wherein the stored publisher contact and billing information is to be stored in a database.
275. The interface of clause 265, further comprising an interaction interface mechanism to specify metadata.
276. The interface of clause 275, wherein the interaction interface mechanism to effect submission is further configured to submit metadata to a metadata database to be associated with respective data submitted to the unique, persistent, and universal name identifier database.
277. The interface of clause 265, wherein the mechanism to specify a prefix sets a flag for automatically generating a prefix.
278. The interface of clause 265, wherein the mechanism to specify a suffix sets a flag for automatically generating a suffix.
279. The interface of clause 265, wherein the selection mechanism to specify a location is a file selection tool.
280. The interface of clause 265, wherein the selection mechanism to specify a location is a URL text field.
281. The interface of clause 265, wherein the mechanism to effect submission of data is a button.
282. The interface of clause 265, wherein the mechanism to effect submission of data effects the registration of a unique, persistent, and universal name identifier for a document.
283. The interface of clause 265, wherein the mechanism to effect submission of data effects the registration of a unique, persistent, and universal name identifier for a selection of information.
284. The interface of clause 265, wherein the effectation of the registration of a unique, persistent, and universal name identifier for a selection of information is automatic without further user interaction.
285. The interface of clause 265, wherein the mechanism to effect submission of data is a menu.
286. The interface of clause 265, wherein the mechanism to effect submission of data imbeds identifying tags within the context of a selection of information.
287. The interface of clause 265, wherein the mechanism to effect submission of data imbeds identifying tags within a document.
288. The interface of clause 265, wherein the mechanism to effect submission of data stores a provisional unique, persistent, and universal name identifier .
289. The interface of clause 288, wherein the provisional unique, persistent, and universal name identifier is stored in a file.
290. The interface of clause 288, wherein the provisional unique, persistent, and universal name identifier is stored in a batch file.
291. The interface of clause 288, wherein the provisional unique, persistent, and universal name identifier is stored in a database.
292. The interface of clause 265, wherein the mechanism to effect submission of data stores a metadata for a provisional unique, persistent, and universal name identifier .
293. The interface of clause 292, wherein the stored metadata includes document information.
294. The interface of clause 293, wherein the document information includes the author of the document.
295. The interface of clause 293, wherein the document information includes the creation date of the document.
296. The interface of clause 293, wherein the document information includes the modification date of the document.
297. The interface of clause 293, wherein the document information includes corporation owning the document.
298. The interface of clause 293, wherein the document information includes automatic document generated values.
299. The interface of clause 298, wherein the automatic document generated values is include index information.
300. The interface of clause 298, wherein the automatic document generated values is table of contents information.
301. The interface of clause 298, wherein the automatic document generated values is glossary information

## Claims

1. A method of using a computer to access information, comprising:
allocating space in a storage facility for information;
making the location of the allocated space addressable and accessible over a communications network;
storing the information to the allocated space;
determining a prefix component of a unique, persistent, and universal name identifier automatically;
generating a unique, persistent, and universal name identifier associated with the information;
receiving metadata for the unique, persistent, and universal name identifier associated for the information;
effecting the registration of the prefix component of a unique, persistent, and universal name identifier in a database for resolving unique, persistent, and universal name identifier and locations of associated information, wherein the prefix component is unique in the database, and wherein the prefix component is configured to be used as a basis for registering subsequent unique, persistent, and universal name identifier with unique suffixes;
effecting the registration of the unique, persistent, and universal name identifier with an address along with allocation of space and storage of the information that are associated to the location where the information is stored in a database for resolving unique, persistent, and universal name identifier and locations of associated information, wherein the unique, persistent, and universal name identifier is unique in the database, wherein said registration is one phase of a multi-phase registration commitment along with registration of the metadata and other required phases including validation of the location information or validation of the accessibility of the content.

2. The method of claim 1, further comprising:
receiving metadata for the unique, persistent, and universal name identifier, wherein the metadata provides descriptive data regarding the unique, persistent, and universal name identifier; and
associating the unique, persistent, and universal name identifier with the metadata so that the unique, persistent, and universal name identifier and metadata can be identified by each other.

3. The method of claim 2, wherein metadata is denied registration in a metadata database by user request for the unique, persistent, and universal name identifier to be unpublished.

4. The method of claim 1, further comprising:
registering the metadata in a metadata database before effecting the registration of the unique, persistent, and universal name identifier in a first phase of a two-phase registration commitment; and
generating an error if the metadata fails to register in the metadata database;
registering the unique, persistent, and universal name identifier in the database in a second phase of a two-phase registration commitment after effecting the registration of the metadata in a first phase of a two-phase registration commitment; and
generating an error if the unique, persistent, and universal name identifier fails to register in the database; and
failing to register a unique, persistent, and universal name identifier if either phase of a two-phase commitment generate an error.

5. The method of claim 4, wherein the generated errors are tagged in XML format.

6. The method of claim 1, further comprising:
indexing the information stored in the storage facility; and
associating the indexed information with the unique, persistent, and universal name identifier so that the unique, persistent, and universal name identifier and indexed information can be identified by each other.

7. The method of claim 1, further comprising:
generating, automatically, an instruction for a suffix component for a unique, persistent, and universal name identifier.

8. The method of claim 7, further comprising:
generating, automatically, an instruction to allocate space for information that is auctioned to a plurality of storage facilities for offers.

9. The method of claim 7, further comprising:
generating, automatically, an instruction to allocate space for information that is auctioned to a plurality of content distributors for offers.

10. The method of claim 7, further comprising:
generating, automatically, an instruction to allocate space for information solicits offers from a plurality of storage facilities.

11. The method of claim 7, further comprising:
generating, automatically, an instruction to allocate space for information solicits offers from a plurality of content distributors.

12. The method of claim 1, further comprising:
generating, automatically, an instruction to register the prefix component of a unique, persistent, and universal name identifier in a database for resolving unique, persistent, and universal name identifier and locations of associated information, wherein the prefix component is unique in the database, and wherein the prefix component is configured to be used as a basis for registering subsequent unique, persistent, and universal name identifier with unique suffixes.

13. The method of claim 1, further comprising:
generating, automatically, an instruction to register the unique, persistent, and universal name identifier in a database for resolving unique, persistent, and universal name identifier and locations of associated information, wherein the unique, persistent, and universal name identifier is unique in the database.

14. A program stored on a medium readable by a processor, the program comprising instructions to implement the method of any preceding claim.

15. A system or apparatus arranged to perform the method of any of claims 1 to 13.
